(19) Europäisches Patentamt
European Patent Office
Office européen des brevets

(11) **EP 4 455 927 B1**

(12) **EUROPEAN PATENT SPECIFICATION**

(45) Date of publication and mention
of the grant of the patent:
**07.05.2025 Bulletin 2025/19**

(21) Application number: **23754692.4**

(22) Date of filing: **10.03.2023**

(51) International Patent Classification (IPC):
**G01V 1/01** *(2024.01)*     **E21B 43/26** *(2006.01)*
**E21B 47/00** *(2012.01)*

(52) Cooperative Patent Classification (CPC):
**G01V 1/01; E21B 43/26; E21B 47/00;**
G01V 2210/646

(86) International application number:
**PCT/CN2023/080691**

(87) International publication number:
**WO 2024/183084 (12.09.2024 Gazette 2024/37)**

(54) **METHOD AND SYSTEM FOR ASSESSING POTENTIAL CATASTROPHE RISK IN REAL TIME TO OPTIMIZE FRACTURING CONSTRUCTION PARAMETERS**

VERFAHREN UND SYSTEM ZUR BEURTEILUNG DES POTENTIELLEN KATASTROPHENRISIKOS IN ECHTZEIT ZUR OPTIMIERUNG VON BRUCHKONSTRUKTIONSPARAMETERN

PROCÉDÉ ET SYSTÈME POUR ÉVALUER UN RISQUE DE CATASTROPHE POTENTIELLE EN TEMPS RÉEL POUR OPTIMISER DES PARAMÈTRES DE CONSTRUCTION DE FRACTURATION

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **06.03.2023 CN 202310202224**

(43) Date of publication of application:
**30.10.2024 Bulletin 2024/44**

(73) Proprietor: **Chengdu University of Technology Chengdu, Sichuan 610059 (CN)**

(72) Inventors:
• **HU, Jun**
**Chengdu, Sichuan 610059 (CN)**

• **ZHANG, Hui**
**Chengdu, Sichuan 610059 (CN)**
• **XU, Qiang**
**Chengdu, Sichuan 610059 (CN)**
• **CAO, Junxing**
**Chengdu, Sichuan 610059 (CN)**

(74) Representative: **Schneiders & Behrendt Bochum Gerard-Mortier-Platz 6 44793 Bochum (DE)**

(56) References cited:
**CN-A- 106 971 269     CN-A- 112 505 769
CN-A- 112 505 769     CN-A- 113 094 924
US-A1- 2017 132 339     US-A1- 2018 293 789**

**Description**

**CROSS REFERENCE TO RELATED APPLICATION**

The present application claims the priority to Chinese Patent Application No. 202310202224.X, filed with the Chinese Patent Office on March 06, 2023 and entitled "METHOD AND SYSTEM FOR ASSESSING POTENTIAL DISASTER RISK IN REAL TIME TO OPTIMIZE HYDRAULIC-FRACTURING ENGINEERING PARAMETERS".

**TECHNICAL FIELD**

The present disclosure relates to the field of shale gas exploitation, geothermal exploitation, $CO_2$ storage, etc., and in particular to a method and system for assessing a potential disaster risk in real time to optimize hydraulic-fracturing engineering parameters.

**BACKGROUND**

Hydraulic fracturing technology functions as an extremely critical technology during development of strategic clean energy shale gas or geothermal. However, rapid increase in a scale of fracturing exploitation of shale gas, geothermal over the years has prompted wide observation of a wide range of earthquake events and casing deformations induced by hydraulic fracturing. Some events having a large earthquake magnitude (which is greater than magnitude 3) and frequent downhole casing deformations have caused huge economic losses and social impacts, to which high attention has been paid from a scientific community and an industrial community. In view of that, how to reduce a potential risk of the induced earthquake and casing deformation, and how to reduce such a risk by adjusting an industrial production strategy in real time and optimizing hydraulic-fracturing engineering parameters have become problems to be urgently solved.

CN 106971269 A discloses a method for estimating induced earthquake risk based on probability distribution during CO2 injection, comprising the step of establishing an induced earthquake physical prediction model.

**SUMMARY**

An objective of the present disclosure is to provide a method and system for assessing a potential disaster risk in real time to optimize hydraulic-fracturing engineering parameters, which can reduce a potential risk of an earthquake and a casing deformation in a process of shale gas or geothermal exploitation.

To achieve the above purpose, the present disclosure provides the following technical solutions.

A method for assessing a potential disaster risk in real time to optimize hydraulic-fracturing engineering parameters includes:

obtaining, by taking a target shale gas or geothermal development platform as a center, earthquake data in a process of shale gas or geothermal exploitation in a target region in real time by means of near-field monitoring, where the earthquake data of the target region is three-component continuous waveform data monitored by an earthquake monitoring apparatus;

locating each earthquake event according to the earthquake data to obtain cluster information of each earthquake event, and inferring a spatial distribution form and a geometric dimension of a fracture and a spatial distribution form and a geometric dimension of a fault according to the cluster information;

obtaining production factor data of a construction unit in the process of shale gas or geothermal exploitation in the target region and casing deformation data occurring in a process of single well fracturing in real time, where the production factor data includes a fluid injection volume, a fluid injection rate, a real-time bottom hole pressure, a fluid flowback amount and injected fluid properties, and the casing deformation data includes casing deformation time, a casing deformation location, a casing deformation amount, a casing inner diameter and a maximum diameter of a milling tool;

constructing a space-time relation fitter, and screening, according to the cluster information of each earthquake event, earthquake events satisfying a set condition on the basis of the space-time relation fitter to obtain an induced earthquake time series dataset;

calculating a first linear correlation coefficient and a first nonlinear correlation coefficient of each of the production factor data and the induced earthquake time series dataset, and a second linear correlation coefficient and a second nonlinear correlation coefficient of each of the production factor data and the casing deformation data;

calculating a first regression coefficient of each of the production factor data and the induced earthquake time series dataset and a second regression coefficient of each of the production factor data and the casing deformation data with a multiple regression model;

calculating a first importance weight of each of the production factor data to the induced earthquake time series dataset with a weighted average according to the first linear correlation coefficient, the first nonlinear correlation coefficient and the first regression coefficient;

calculating a second importance weight of each of the production factor data to the casing deformation data with a weighted average according to the second linear correlation coefficient, the second nonlinear correlation coefficient and the second regression coefficient;

determining a main production control factor according to the first importance weight and the second importance weight;

constructing a multi-field coupled numerical model, and determining a risk threshold of the main production control factor of the target region on the basis of the multi-field coupled numerical model, where the multi-field coupled numerical model includes a three-dimensional geological structure model including fault risk parameters and a multi-field coupled constitutive equation of a hydraulic fracturing flow field-fault slip force field; and

assessing a potential earthquake risk in real time on the basis of the risk threshold of the main production control factor.

A system for assessing a potential disaster risk in real time to optimize hydraulic-fracturing engineering parameters is provided, which is applied to the above method for assessing a potential disaster risk in real time to optimize hydraulic-fracturing engineering parameters, and includes,:

a first obtaining module configured to obtain, by taking a target shale gas or geothermal development platform as a center, earthquake data in a process of shale gas or geothermal exploitation in a target region in real time by means of near-field monitoring, where the earthquake data of the target region is three-component continuous waveform data monitored by an earthquake monitoring apparatus;

a location module configured to locate each earthquake event according to the earthquake data to obtain cluster information of each earthquake event, and infer a spatial distribution form and a geometric dimension of a fracture and a spatial distribution form and a geometric dimension of a fault according to the cluster information;

a second obtaining module configured to obtain production factor data of a construction unit in the process of shale gas or geothermal exploitation in the target region and casing deformation data occurring in a process of single well fracturing in real time, where the production factor data includes a fluid injection volume, a fluid injection rate, a real-time bottom hole pressure, a fluid flowback amount and injected fluid properties, and the casing deformation data includes casing deformation time, a casing deformation location, a casing deformation amount, a casing inner diameter and a maximum diameter of a milling tool;

a screening module configured to construct a space-time relation fitter, and screen, according to the cluster information of each earthquake event, earthquake events satisfying a set condition on the basis of the space-time relation fitter to obtain an induced earthquake time series dataset;

a first calculation module configured to calculate a first linear correlation coefficient and a first nonlinear correlation coefficient of each of the production factor data and the induced earthquake time series dataset, and a second linear correlation coefficient and a second nonlinear correlation coefficient of each of the production factor data and the casing deformation data;

a second calculation module configured to calculate a first regression coefficient of each of the production factor data and the induced earthquake time series dataset and a second regression coefficient of each of the production factor data and the casing deformation data with a multiple regression model;

a third calculation module configured to calculate a first importance weight of each of the production factor data to the induced earthquake time series dataset with a weighted average according to the first linear correlation coefficient, the first nonlinear correlation coefficient and the first regression coefficient;

a fourth calculation module configured to calculate a second importance weight of each of the production factor data to the casing deformation data with a weighted average according to the second linear correlation coefficient, the second nonlinear correlation coefficient and the second regression coefficient;

a main production control factor determination module configured to determine a main production control factor according to the first importance weight and the second importance weight;

a risk threshold determination module configured to construct a multi-field coupled numerical model, and determine a risk threshold of the main production control factor of the target region on the basis of the multi-field coupled numerical model, where the multi-field coupled numerical model includes a three-dimensional geological structure model including fault risk parameters and a multi-field coupled constitutive equation of a hydraulic fracturing flow field-fault slip force field; and

an assessment module configured to assess a potential earthquake risk in real time on the basis of the risk threshold of the main production control factor.

An electronic device is provided, including a memory and a processor, where the memory is configured to store a computer program, and the processor runs the computer program to cause the electronic device to execute the above method for assessing a potential disaster risk in real time to optimize hydraulic-fracturing engineering parameters.

A computer readable storage medium storing a computer program is provided, where the computer program implements the above method for assessing a potential disaster risk in real time to optimize hydraulic-fracturing engineering parameters when executed by a processor.

According to particular embodiments provided by the present disclosure, the present disclosure has the following technical effects:

according to the method for assessing a potential disaster risk in real time to optimize hydraulic-fracturing engineering parameters provided by the present disclosure, main production control factor is determined, a risk threshold of the main production control factor is determined, and the main production control factor is regulated and controlled in real time according to the risk threshold of the main production control factor, thereby reducing a potential risk of an earthquake and a casing deformation, and providing a key scientific basis for safe and green development of a shale gas or geothermal industry.

## BRIEF DESCRIPTION OF THE DRAWINGS

FIG. 1 is a flow chart of a method for assessing a potential disaster risk in real time to optimize hydraulic-fracturing engineering parameters according to the present disclosure;

FIG. 2 is a technical route diagram according to the present disclosure;

FIG. 3 is a space constraint graph according to the present disclosure;

FIG. 4 is a real-time evolution diagram of a Pearson correlation coefficient according to the present disclosure; and

FIG. 5 is a block diagram of a system for assessing a potential disaster risk in real time to optimize hydraulic-fracturing engineering parameters according to the present disclosure.

Description of reference numerals:

1-first obtaining module, 2-location module, 3-second obtaining module, 4-screening module, 5-first calculation module, 6-second calculation module, 7-third calculation module, 8-fourth calculation module, 9-main production control factor determination module, 10-risk threshold determination module, and 11-assessment module.

## DETAILED DESCRIPTION OF THE EMBODIMENTS

The technical solutions in the embodiments of the present disclosure will be clearly and completely described below in combination with the accompanying drawings in the embodiments of the present disclosure.

The present disclosure provides a method and system for assessing a potential disaster risk in real time to optimize hydraulic-fracturing engineering parameters, which may reduce a potential risk of an earthquake and a casing deformation in a process of shale gas or geothermal exploitation.

Embodiment 1

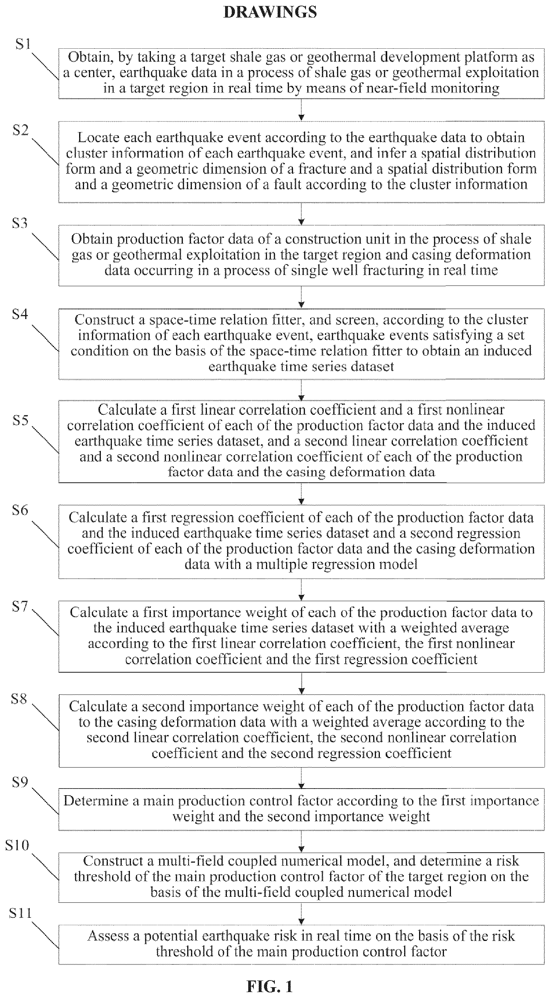

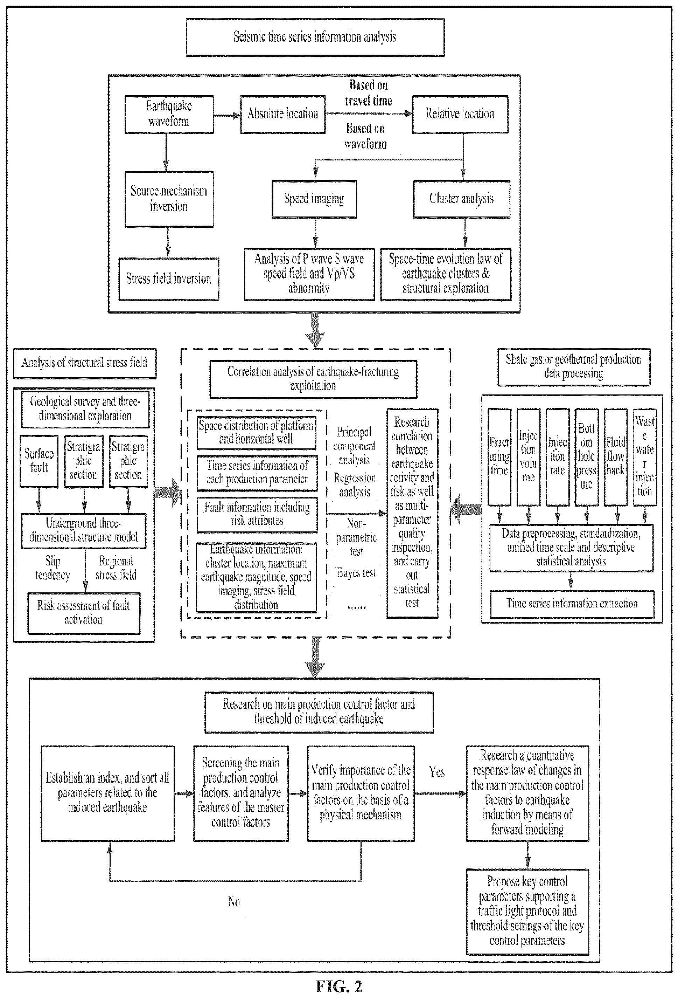

As shown in FIGs. 1 and 2, the present disclosure provides a method for assessing a potential disaster risk in real time to optimize hydraulic-fracturing engineering parameters. The method includes:

S1, obtain, by taking a target shale gas or geothermal development platform as a center, earthquake data in a process of shale gas or geothermal exploitation in a target region in real time by means of near-field monitoring, where the earthquake data of the target region is three-component continuous waveform data monitored by an earthquake monitoring apparatus. In practical applications, 12-15 short-period earthquake monitoring apparatuses are arranged by taking the target shale gas or geothermal development platform as the center and 2 kilometers, 5 kilometers and 10 kilometers as radii to monitor a microearthquake and a moderately strong earthquake in real time in an entire process of hydraulic fracturing. Earthquake data obtained by means of monitoring specifically refers to the three-component continuous waveform data received by each monitoring station in a horizontal (NS and WE directions) direction and a vertical (Z direction) directions. That is, time series data including continuous amplitude information and speed information has a frequency generally ranging 10 Hz to 100 Hz.

S2, locate each earthquake event according to the earthquake data to obtain cluster information of each earthquake event, and infer a spatial distribution form and a geometric dimension of a fracture and a spatial distribution form and a geometric dimension of a fault according to the cluster information. S2 specifically includes:

S21, carry out, by using a band-pass filtration method and a wavelet transform method, denoising processing on the three-component continuous waveform data to obtain a continuous signal having a high signal-to-noise ratio. Specifically, frequency characteristics of a band-pass filter are as follows:

$$H_{\mathrm{d}}\left(e^{j\omega}\right) = \begin{cases} e^{-j\omega\tau}, & \omega_1 \leqslant |\omega| \leqslant \omega_2 \\ 0, & \omega \text{ is a different value} \end{cases}$$

. $\omega_1$ is a lower cutoff frequency, $\omega_2$ is an upper cutoff frequency, $\omega$ is a cutoff frequency, and $H_d$ is a frequency response function.

S22, extract a three-component waveform signal of each earthquake event according to the continuous signal having a high signal-to-noise ratio. In practical applications, a three-component waveform signal of a separate earthquake event is extracted by using a long and short time window method.

S23, according to the three-component waveform signal of each earthquake event, determine absolute location of each earthquake event on the basis of a grid search method.

S24, according to the absolute location, determine relative location of each earthquake event on the basis of a double-difference location algorithm.

S25, according to the relative location of each earthquake event, determine the cluster information for each earthquake event on the basis of a cluster distribution of an earthquake.

S26, according to the cluster information, infer the spatial distribution form and the geometric dimension of the fracture and the spatial distribution form and the geometric dimension of the fault.

In practical applications, the spatial distribution form and the geometric dimension of the fracture may be inferred according to the cluster distribution of the earthquake. A mainstream method for locating an earthquake includes an absolute location algorithm and a relative location algorithm. The earthquake is precisely located through the following method: carrying out absolute location based on the grid search method, and then carrying out relative location based on the double-difference location algorithm. For traditional earthquake location, there are two main factors affecting accuracy of earthquake location. One factor is an error picked up when an earthquake phase arrives, and the other factor is an error in a speed model. The present disclosure precisely locates the earthquake by using a double-difference location method. Double-difference relative location of the earthquake just may overcome the two defects of traditional earthquake location to some extent. Double-difference location may directly utilize a waveform cross-correlation method to obtain an arrival time difference. For an adjacent earthquake, propagation paths almost coincide outside a source region. Therefore, an effect of a model error outside the source region may be partially eliminated by means of a "difference" process.

S3, obtain production factor data of a construction unit in the process of shale gas or geothermal exploitation in the target region and casing deformation data occurring in a process of single well fracturing in real time, where the production factor data includes a fluid injection volume, a fluid injection rate, a real-time bottom hole pressure, a fluid flowback amount and injected fluid properties, and the casing deformation data includes casing deformation time, a casing deformation location, a casing deformation amount, a casing inner diameter and a maximum diameter of a milling tool. In practical applications, the production factor data of the construction unit in the process of shale gas or geothermal exploitation in the target region is shale gas or geothermal fracturing construction data, i.e. various real-time industrial parameters collected and sorted in the process of shale gas or geothermal fracturing exploitation, and includes, but not limited to, an accurate spatial location of a fracturing platform, precise fracturing time of each well section, a volume and rate of a single-stage injected fluid, a wellhead pressure, a pump pressure, a flowback amount, etc.

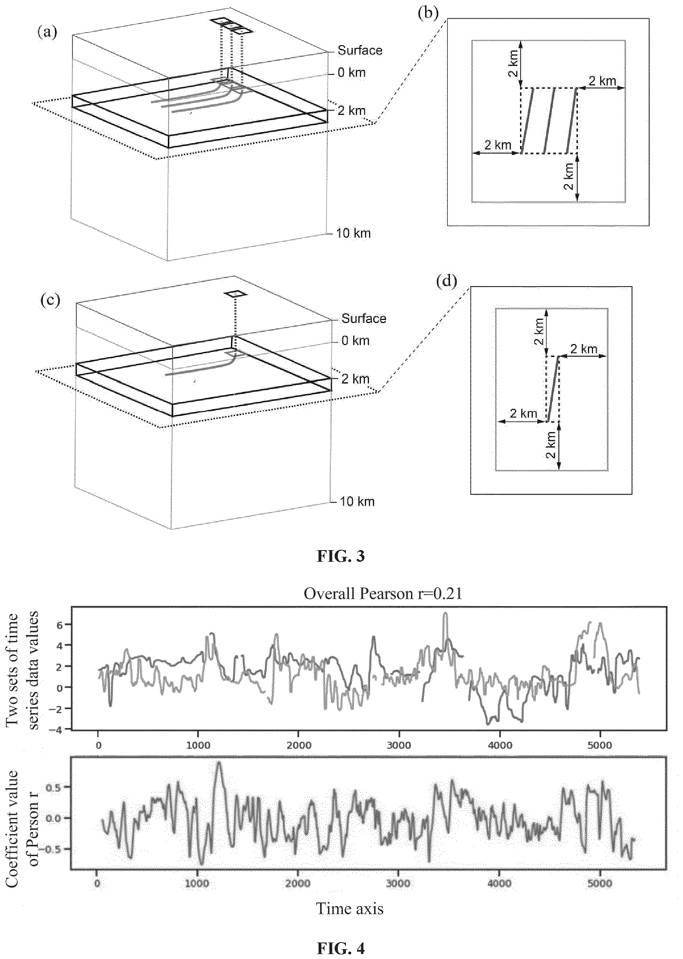

S4, construct a space-time relation fitter, and screen, according to the cluster information of each earthquake event, earthquake events satisfying a set condition on the basis of the space-time relation fitter to obtain an induced earthquake time series dataset. Specifically, as shown in FIG. 3, the space-time relation fitter configured to screen induced earthquakes is designed: in terms of space, a horizontal direction is constrained by a distance of 2000 m from a fracturing section, and a vertical direction is constrained by a distance of 10000 m from a sea level; and in terms of time, time is constrained by taking a first section of fracturing as a starting point and delay of 10 days after an end section of fracturing is completed as an ending point. (a) in FIG. 3 is a schematic solid diagram of a spatial range of a fitter on one side of a platform, (b) in FIG. 3 is a corresponding plane top view, (c) in FIG. 3 is a schematic solid diagram of a spatial range of a fitter for a single horizontal well, and (d) in FIG. 3 is a corresponding plane top view. The induced earthquake time series dataset x corresponding to each fracturing platform, each horizontal well and each fracturing section is screened out according to the above fitter. The induced earthquake time series dataset x includes time, a location and an earthquake magnitude.

S5, calculate a first linear correlation coefficient and a first nonlinear correlation coefficient of each of the production factor data and the induced earthquake time series dataset, and a second linear correlation coefficient and a second nonlinear correlation coefficient of each of the production factor data and the casing deformation data. S5 specifically includes:

S51, calculate a first globally synchronized Pearson correlation coefficient of each of the production factor data and the induced earthquake time series dataset and a second globally synchronized Pearson correlation coefficient of each of the production factor data and the casing deformation data with a Pearson correlation coefficient method.

S52, according to the first globally synchronized Pearson correlation coefficient, select a first set time window to calculate a locally synchronized Pearson correlation coefficient, so as to obtain the first linear correlation coefficient.

S53, according to the second globally synchronized Pearson correlation coefficient, select a second set time window to calculate a locally synchronized Pearson correlation coefficient, so as to obtain the second linear correlation coefficient.

In practical applications, linear correlation between production factor time series of fracturing exploration of all shale gas or geothermal and an induced earthquake time series are analyzed by using a Pearson correlation coefficient method separately. A Pearson coefficient is configured to describe a degree and direction of linear correlation between two continuous series with a value interval of [-1,1]. The Pearson correlation coefficient of two time series samples is a product of a covariance of the two time series samples divided by a standard deviation, which is calculated as follows:

$$
\begin{aligned}
r(\mathbf{x}, \mathbf{y}) &= \frac{\mathrm{cov}(\mathbf{x}, \mathbf{y})}{\sqrt{\mathrm{var}(\mathbf{x})\,\mathrm{var}(\mathbf{y})}} \\
&= \frac{E[(\mathbf{x} - \mu_{\mathbf{x}})(\mathbf{y} - \mu_{\mathbf{y}})]}{\sigma_{\mathbf{x}}\sigma_{\mathbf{y}}} \\
&= \frac{E[\mathbf{xy}] - E[\mu_{\mathbf{xy}}] - E[\mu_{\mathbf{y}}\mathbf{x}] + E[\mu_{\mathbf{y}}\mu_{\mathbf{x}}]}{\sigma_{\mathbf{x}}\sigma_{\mathbf{y}}} \\
&= \frac{E[\mathbf{xy}] - E[\mathbf{x}]E[\mathbf{y}] - E[\mathbf{y}]E[\mathbf{x}] + E[\mathbf{y}]E[\mathbf{x}]}{\sigma_{\mathbf{x}}\sigma_{\mathbf{y}}} \\
&= \frac{E[\mathbf{xy}] - E[\mathbf{x}]E[\mathbf{y}]}{\sigma_{\mathbf{x}}\sigma_{\mathbf{y}}} \\
&= \frac{E[\mathbf{xy}] - E[\mathbf{x}]E[\mathbf{y}]}{\sigma_{\mathbf{x}}\sigma_{\mathbf{y}}}
\end{aligned}
$$

$x$ and $y$ represent two sets of time series data, $r(x, y)$ is the Pearson correlation coefficient, $cov(x, y)$ is the standard deviation, $E$ is a mathematical expectation, and $\sigma$ is a variance. In the present disclosure, $x$ represents the earthquake event or an earthquake energy series screened by the space-time relation fitter, and $y_i$ represents a construction factor of shale gas or geothermal fracturing exploitation. $i=1,2,...5$ correspond to a fluid injection volume, an injection rate, a real-time bottom hole pressure/pump pressure, a fluid flowback amount, and injected fluid properties (quartz sand content, viscosity, density, etc.) respectively.

The globally synchronized Pearson correlation coefficient is calculated, and then an appropriate time window (such as 1 minute) is selected to calculate the locally synchronized Pearson correlation coefficient to obtain linear correlation features that change with time. As shown in FIG. 4, the Pearson correlation coefficient $r(x,y_i)$ of the earthquake series and the time series of multiple shale gas or geothermal construction factors is obtained.

S54, calculate a first penalty function value according to each of the production factor data and the induced earthquake time series dataset, and a second penalty function value according to each of the production factor data and the casing deformation data.

S55, calculate the first nonlinear correlation coefficient of each of the production factor data and the induced earthquake time series dataset with an adaptively constrained dynamic time warping (ACDTW) algorithm according to the first penalty function value.

S56, calculate the second nonlinear correlation coefficient of each of the production factor data and the casing deformation data with the ACDTW algorithm according to the second penalty function value.

In practical applications, similarity/correlation between two nonlinear time series variables is calculated with the ACDTW algorithm. Step 1, limit the number of repetitions of series points by constructing a penalty function. The step includes two cases: a first case is that two nonlinear time series variables have equal lengths; and a second case is that two nonlinear time series variables have unequal lengths.

For the first case, a first penalty function (which is used for time series having equal lengths) is as follows:

$$
c(x_{i,j}) = \left[\left(\frac{m+n}{2}\right) / \max(m,n)\right] \cdot N(x_{i,j}) = \frac{m+n}{2\max(m,n)} \cdot N(x_{i,j})
$$
$$
i = 2, \ldots, m;, \; j = 2, \ldots, n
$$

. $m$ and $n$ represent a length of the series, and $N(x_{i,j})$ represents the number of times of use of the series points.

For the second case, a second penalty function (which is used for time series having unequal lengths) is as follows:

$$c(x_{i,j}) = \begin{cases} \left[\left(\frac{m+n}{2}\right)/\max(m,n)\right] \cdot N(x_{i,j}), 0 < \frac{m}{n} \le \frac{1}{2} \text{ or } 0 < \frac{n}{m} \le \frac{1}{2} \\ \left[\max(m,n)/\left(\frac{m+n}{2}\right)\right] \cdot N(x_{i,j}), \frac{m}{n} > \frac{1}{2} \text{ or } \frac{n}{m} > \frac{1}{2} \end{cases}$$
$$= \begin{cases} \frac{m+n}{2\max(m,n)} \cdot N(x_{i,j}), 0 < \frac{m}{n} \le \frac{1}{2} \text{ or } 0 < \frac{n}{m} \le \frac{1}{2} \\ \frac{2\max(m,n)}{m+n} \cdot N(x_{i,j}), \frac{m}{n} > \frac{1}{2} \text{ or } \frac{n}{m} > \frac{1}{2} \end{cases}$$

$m$ and $n$ represent a length of the series, and $N(x_{i,j})$ represents the number of times of use of the series points.

Step 2, calculate an ACDTW value on the basis of a penalty function value:

$$\mathrm{ACDTW}(1,1) = d_{1,1}$$

$$\mathrm{ACDTW}(i,j) = d_{i,j} + \min \begin{cases} c(x_{i-1,j}) \cdot d_{i,j} + \mathrm{ACDTW}(i-1,j) \\ \mathrm{ACDTW}(i-1,j-1) \\ c(x_{i,j-1}) \cdot d_{i,j} + \mathrm{ACDTW}(i,j-1) \end{cases}.$$

$d_{i,j}$ represents a Euclidean distances between points $i$ and $j$. An ACDTW similarity $ACDTW(x,y_i)$ of the earthquake sequence and the time series of multiple shale gas or geothermal construction factors is obtained in this step.

S6, calculate a first regression coefficient of each of the production factor data and the induced earthquake time series dataset and a second regression coefficient of each of the production factor data and the casing deformation data with a multiple regression model. In practical applications, the importance weight of a fracturing production index series corresponding to an earthquake activity series is quantified by using linear/nonlinear regression analysis. Step 1, establish the multiple regression model:

$$\begin{cases} x = \beta_0 + \beta_1 y_1 + \cdots + \beta_m y_m + \varepsilon \\ \varepsilon \sim N\left(0, \sigma^2\right) \end{cases}$$

. $x$ is an earthquake series dataset, $y_i$ is an index of multiple fracturing production factors, and $\beta_0, \beta_1,...\beta_m$ are regression coefficients. $n$ separate observation data $[b_i, a_{i1},...,a_{im}]$ are obtained. $b_i$ is an observation value of $x$, and $a_{i1},...,a_{im}$ are observation values of $y_1,...,y_m$ respectively, $i=1,2,...,m$.

$$\begin{cases} b_i = \beta_0 + \beta_1 \alpha_{i1} + \cdots + \beta_m \alpha_{im} + \varepsilon_i \\ \varepsilon_i \sim N\left(0, \sigma^2\right), i = 1, \cdots, n \end{cases} \quad Y = \begin{bmatrix} 1 & a_{11} & \cdots & a_{1m} \\ \vdots & \vdots & \ddots & \vdots \\ 1 & a_{n1} & \cdots & a_{nm} \end{bmatrix}, \quad X = \begin{bmatrix} b_1 \\ \vdots \\ b_n \end{bmatrix}$$

and $\varepsilon = [\varepsilon_1, \cdots, \varepsilon_n]^{\mathrm{T}}$,

$\beta = [\beta_0, \beta_1, \cdots, \beta_m]^{\mathrm{T}}$ are obtained, such that the multiple regression model may be simplified as: $\begin{cases} X = Y\beta + \varepsilon \\ \varepsilon \sim N\left(0, \sigma^2 E_n\right) \end{cases}$. $E_n$ is an n-order identity matrix.

A parameter $\beta$ in the regression model is evaluated by using the least squares method. That is, an estimated value $\hat{\beta}$ is selected. When $\beta = \hat{\beta}$, $j=0,1,...,m$, the error sum of squares $Q$ is as follows:

$$Q = \sum_{i=1}^{n} \varepsilon_i^2 = \sum_{i=1}^{n} \left(b_i - \hat{b}_i\right)^2 = \sum_{i=1}^{n} \left(b_i - \beta_0 - \beta_1 a_{i1} - \cdots - \beta_m a_{im}\right)^2$$

. When Q reaches a minimum value, $\dfrac{\partial Q}{\partial \beta_j} = 0$, $j = 0, 1, 2, \cdots, n$ is set to obtain:

$$\begin{cases} \frac{\partial Q}{\partial \beta_0} = -2\sum_{i=1}^{n}(b_i - \beta_0 - \beta_1 a_{i1} - \cdots - \beta_m a_{im}) = 0 \\ \frac{\partial Q}{\partial \beta_j} = -2\sum_{i=1}^{n}(b_i - \beta_0 - \beta_1 a_{i1} - \cdots - \beta_m a_{im})a_{ij} = 0, \quad j = 1, 2, \cdots, m \end{cases}$$

through sorting, a normal equation system is obtained:

$$\begin{cases} \beta_0 n + \beta_1 \sum_{i=1}^{n} \alpha_{i1} + \beta_2 \sum_{i=1}^{n} \alpha_{i2} + \cdots + \beta_m \sum_{i=1}^{n} \alpha_{im} = \sum_{i=1}^{n} b_i \\ \beta_0 \sum_{i=1}^{n} \alpha_{i1} + \beta_1 \sum_{i=1}^{n} \alpha_{i1}^2 + \beta_2 \sum_{i=1}^{n} \alpha_{i1}\alpha_{i2} + \cdots + \beta_m \sum_{i=1}^{n} \alpha_{i1}\alpha_{im} = \sum_{i=1}^{n} \alpha_{i1} b_i \\ \vdots \\ \beta_0 \sum_{i=1}^{n} \alpha_{im} + \beta_1 \sum_{i=1}^{n} \alpha_{im}\alpha_{i1} + \beta_2 \sum_{i=1}^{n} \alpha_{im}\alpha_{i2} + \cdots + \beta_m \sum_{i=1}^{n} \alpha_{im}^2 = \sum_{i=1}^{n} \alpha_{im} b_i \end{cases} ;$$

and
a matrix form of the normal equation system and a solution of $\beta$ are as follows:

$$Y^\top Y\beta = Y^{\mathrm{T}}X \text{ and } \hat{\beta} = \left(Y^{\mathrm{T}}Y\right)^{-1}Y^{\mathrm{T}}X.$$

Thus, the regression coefficient $\beta_j$ between the earthquake series and the time series of the multiple shale gas or geothermal construction factors, and the second regression coefficient of each of the production factor data and the casing deformation data are obtained.

S7, calculate a first importance weight of each of the production factor data to the induced earthquake time series dataset with a weighted average according to the first linear correlation coefficient, the first nonlinear correlation coefficient and the first regression coefficient.

S8, calculate a second importance weight of each of the production factor data to the casing deformation data with a weighted average according to the second linear correlation coefficient, the second nonlinear correlation coefficient and the second regression coefficient. In practical applications, according to the similarity/correlation coefficient obtained in S5 and S6, (i.e. $r(x,y_i)$, $ACDTW(x,y_i)$ and $\beta_i$), a value of the first importance weight of a fracturing production factor to earthquake activity and a value of the second importance weight of each of the production factor data to the casing deformation data are calculated with the weighted average.

S9, determine a main production control factor according to the first importance weight and the second importance weight. Specifically, the production factor data corresponding to the first importance weight and the second importance weight that satisfy a set threshold range is the main production control factor. The screened main production control factor $y_i$ at least includes one of the production factor data.

S10, construct a multi-field coupled numerical model, and determine a risk threshold of the main production control factor of the target region on the basis of the multi-field coupled numerical model, where the multi-field coupled numerical model includes a three-dimensional geological structure model including fault risk parameters and a multi-field coupled constitutive equation of a hydraulic fracturing flow field-fault slip force field. S10 specifically includes:

S101, obtain surface structure information of geological survey of the target region, geophysical exploration information of the target region and drilling information of the target region.

S102, construct a three-dimensional earthquake structure model of the target region by using geological object computer aided design (GoCAD) and Comsol software according to the cluster information of each earthquake event, the surface structure information, the geophysical exploration information of the target region and the drilling information of the target region, where the three-dimensional earthquake structure model of the target region includes a three-dimensional geological model of an activated fault and a three-dimensional geological model of a fault to be activated. In practical applications, the three-dimensional earthquake structure model of the target region is built by combining underground hidden movement faults and folds analyzed from geophysical exploration and drilling data, fault information identified by precise earthquake location and surface structure information in regional geological survey data. A distribution form and a structural genesis of an earthquake cluster inside a crust are analyzed and explained by means of the three-dimensional model and update information of a hidden movement fault; and the stress field distribution in the source region is inverted by means of a source mechanism, and a space-time evolution law of the source region is explored, so as to reveal dynamic features and genesis of earthquake rupture.

S103, calculate a slip tendency and a risk value of each fault with principal stress parameters and a quantitative risk assessment (QRA) method according to geometric shapes of the three-dimensional geological model of the activated fault and the three-dimensional geological model of the fault to be activated.

S104, obtain the three-dimensional geological structure model including fault risk parameters according to the slip tendency and the risk value of each fault and the three-dimensional earthquake structure model of the target region.

S105, input the main production control factor as a disturbance term of a regional stress field into the three-dimensional geological structure model including fault risk parameters to obtain a stress field distribution in an inversion source region.

S106, construct a hydraulic fracture propagation model based on a main production control factor by using an elastic equation. In practical applications, a propagation criterion of a quasi-static hydraulic fracture is established by using classical linear elastic fracture mechanics: $K_I = K_{Ic}$. $K_I$ is a stress intensity factor (which is a reciprocal of a square root of a singular stress at a crack tip), and $K_{Ic}$ is fracture toughness.

A fracture width caused by a net pressure (a local fluid pressure minus a confining pressure of a local stratum) at each point on a fracture path is calculated with an elastic equation in the linear elastic fracture mechanics as follows: $Cw = \int_{\Omega(t)} C(x,y;\xi,\eta) w(\xi,\eta,t) d\xi d\eta = p(x,y,t) - \sigma_c(x,y)$. $P(t)$ is a fluid pressure in the fracture, $\sigma_c$ is a minimum value of a local crustal stress, $w(t)$ is a fracture width, a function $C$ includes all material information of a layered elastic medium, and $\Omega(t)$ is a region occupied by the fracture at a moment $t$.

The fluid pressure $P(t)$, the fracture width $w(t)$ and a fracture length $L(t)$ are approximately estimated by a Perkins-Kern-Nordgren (*PKN*) equation as:

$$L(t) = 0.654 \left[ \frac{Gq_o^3}{(1-\nu)\mu h^4} \right]^{(1/5)} t^{(4/5)};$$

$$W(t) = 2.5 \left[ \frac{(1-\nu)\mu q_o^2}{Gh} \right]^{(1/5)} t^{(1/5)};$$

and

$$P(t) = 2.5 \left[ \frac{G^6 \mu q_o^2}{(1-\nu)^4 h^6} \right]^{(1/5)} t^{(1/5)}.$$

$L(t)$ is a fracture half-length at the moment t, $W(t)$ is a fracture width at the moment $t$, $P(t)$ is an initial pressure in the fracture at the moment $t$, $G$ is a shear modulus, $q_o$ is an injection rate, $\mu$ is a viscosity of an injected fluid, and $h$ is a fracture height of the fracture. Thus, the hydraulic fracture propagation model based on a main production control factor is obtained.

S107, calculate a flow field in a fracture after initiation of a hydraulic fracture according to the main production control factor and the hydraulic fracture propagation model based on a main production control factor. In practical applications, the flow field is generated in the fracture after initiation of the hydraulic fracture, which is described by using a fluid Reynold equation as follows:

$$\frac{\partial w}{\partial t} = \nabla \cdot [D(w)(\nabla p - \rho g)] + \delta(x,y)Q$$

. $\rho$ is a fluid density, $g$ is a gravitational acceleration vector, $\delta$ is a Dirac function, Q is a source injection rate, and $D(w)=w^3/12\mu$ for a Newtonian fluid.

S108, construct the multi-field coupled constitutive equation of the hydraulic fracturing flow field-fault slip force field. Specifically, the multi-field coupled constitutive equation of the hydraulic fracturing flow field-fault slip force field is as follows:

$$\frac{1}{M}\frac{\partial p}{\partial t} + \frac{n_1}{s}\frac{\partial s}{\partial t} = \frac{1}{s}\frac{\partial \zeta}{\partial t} - \alpha\frac{\partial \varepsilon}{\partial t} + \beta\frac{\partial T}{\partial t};$$

$$\sigma_{ij}^{*} + \alpha \frac{\partial P}{\partial t} \delta_{ij} = H\left(\sigma_{ij}, \xi_{ij} - \xi_{ij}^{T}, \kappa\right);$$

and

$$q_i = -k_{il} \cdot k^*(s)\left[p - \rho_f x_j g_j\right].$$

The first equation provides a relation between a volume strain of the fluid and a pore pressure. $p$ is a pore pressure, $s$ is a fluid saturation, $\varepsilon$ is a volumetric strain amount, $T$ is a temperature, $M$ is a Biot modulus, $n_1$ is a porosity, $\alpha$ is a Biot coefficient, and $\beta$ is an undrained heat coefficient. The second equation describes a stress-strain response between the fluid and a rock matrix in a porous media. $\sigma_{ij}^*$ is a stress change rate, $\delta_{ij}$ is a Kronecker symbol, $H$ is a function describing a constitutive relation, $\kappa$ is a historical stress loading parameter, $\sigma_{ij}$ represents a stress, and $\xi_{ij}$ represents a strain. The third equation is a fluid transport equation, which obeys a Darcy's law. $q_i$ is a discharge vector for a particular fluid, $k$ is an absolute percolation coefficient tensor of the medium, $k^*(s)$ is a relative percolation coefficient, which is a function of a fluid saturation $s$, $\rho_f$ is a fluid density, and $g_i$(i=1,2,3) represents 3 components of a gravity vector.

S109, according to the multi-field coupled constitutive equation of the hydraulic fracturing flow field-fault slip force field, the stress field distribution in the inversion source region and the flow field in the fracture after initiation of the hydraulic fracture, determine the risk threshold of the main production control factor in the target region by means of forward modeling. S109 specifically includes:

S1091, according to the multi-field coupled constitutive equation of the hydraulic fracturing flow field-fault slip force field, the stress field distribution of the inversion source region, the flow field in the fracture after initiation of the hydraulic fracture and the three-dimensional geological structure model including fault risk parameters, determine a theoretical main production control factor by means of forward modeling.

S1092, when the theoretical main production control factor is inconsistent with the main production control factor, update the main production control factor and the theoretical main production control factor according to the current earthquake data of the target region and the current production factor data to obtain an updated main production control factor and an updated theoretical main production control factor.

S1093, determine the risk threshold of the main production control factor of the target region when the theoretical main production control factor is consistent with the main production control factor. In practical applications, since activation of the fault is a fundamental cause of inducing an earthquake and a casing deformation, it is necessary to elaborate a criterion for distinguishing a fault slip and calculation of a risk tendency. A criterion for initiating fault slip anew follows a Mohr-Coulomb criterion as follows: $\tau = C_0 + \left(\sigma_n - P_0\right)\tan\phi$.

The criterion indicates that when a maximum shear force reaches a certain threshold, the fault slips precariously. The threshold is determined by a cohesion $C_0$ and an internal friction angle $\varphi$ and an effective normal stress $\sigma_n$. In addition, a fault slip tendency $T_s$ is used to indicate difficulty of activation of the fault: $T_S = \tau/\sigma_{neff} \geq \mu_S$. $\sigma_{neff}$ is an effective normal stress, $\mu_s$ is a static friction coefficient, and $\tau$ is a shear stress. Calculation equations of $\sigma_{neff}$ and $\tau$ are as follows:

$$\sigma_{neff} = \sigma_{1eff} \times l^2 + \sigma_{2eff} \times m_1^2 + \sigma_{3eff} \times n_2^2;$$

and

$$\tau = \left[(\sigma_1 - \sigma_2)^2 l^2 m_1^2 + (\sigma_2 - \sigma_3)^2 m_1^2 n_2^2 + (\sigma_3 - \sigma_1)^2 l^2 n_2^2\right]^{1/2}$$

. $\sigma_1$ represents a maximum principal stress, $\sigma_2$ represents an intermediate principal stress, $\sigma_3$ represents a minimum principal stress, and $l$, $m_1$, and $n_2$ represent direction cosines of a normal direction of a fault plane respectively.

The multi-field coupled numerical model constructed by the present disclosure satisfies the following three equilibrium equations:

(1) fluid seepage in a porous medium satisfies a Darcy's law, and a corresponding equation is as follows:

$$q_i = -\kappa_{il} \cdot k^*(s)\left[p - \rho_f x_j g_j\right].$$

$q_i$ is a discharge vector (unit: m³/s) of a particular fluid, $\kappa_{jl}$ is an absolute seepage coefficient tensor of the medium, $k^*(s)$ is a relative seepage coefficient, which is a function of fluid saturation $s$, $\rho_f$ is a fluid density (unit: kg/m³), and $g_i$ (i=1,2,3) represents 3 components of a gravity vector.

(2) For the problem of small deformation, a weight equilibrium equation of the fluid is expressed as follows:

$$-q_{i,i} + q_v = \frac{\partial \zeta}{\partial t}$$

. $Qi,i_{i,i}$ is a specific flow vector (unit: meter per second), $q_v$ is an intensity of a volumetric flow source, and $\zeta$ is a fluid volume or fluid capacity per unit volume of a porous material.

(3) Fluid-structure couple calculation satisfies a law of mass conservation, and an equation form is as follows:

$$\sigma_{ij,j} + \rho g_i = \rho \frac{dV_i}{dt}$$

.

$\rho$ is a volume density of the model, and consists of two parts. A calculation equation of the volume density is as follows: $\rho = \rho_d + n_1 s \rho_f$. $\rho_d$ is a density of the rock matrix, $\rho_f$ is a fluid density, $n_1$ is a porosity, and $s$ is a fluid saturation.

S11, assess a potential earthquake risk in real time on the basis of the risk threshold of the main production control factor. In practical applications, multiple production factors as disturbance terms of a regional stress field are input. A constitutive equation set and a numerical calculation model are constructed by taking seepage propagation of the fracture fluid, fixed rock mechanics and fault mechanics as a theoretical basis. A mechanical mechanism and actual effectiveness of the main control factors in earthquake occurrence and fault activity provided by statistical analysis in S8 are verified by means of forward modeling. By adjusting input parameters such as an injection volume, an injection rate and a construction pressure in a multi-field coupled model, prediction results of the earthquake risk and the casing deformation are verified, and a basis for adjusting the main production control factor is provided. The multi-field coupling model is a model algorithm corresponding to S106-S108.

Specifically, when the main production control factor is less than the risk threshold, is no potential earthquake risk exists in the process of shale gas or geothermal exploitation in the target region; and when the main production control factor is not less than the risk threshold, the potential earthquake risk does not exist in the process of shale gas or geothermal exploitation in the target region.

In addition, after S10 is executed, the method further includes: adjust the main production control factor according to the risk threshold of the main production control factor, so as to make the main production control factor less than the risk threshold.

After main control factors that induce earthquakes are found out on the basis of the main production control factor obtained by statistical analysis of S9, mechanism research, and numerical simulation verification in S10, an empirical risk threshold applicable to a certain region is provided according to data characteristics of the main control factors, thereby providing a theoretical basis for boundary division of "risk control of induced earthquake and casing deformation". In actual production, when the risk of the induced earthquake and casing deformation reaches a boundary to some extent, alarm information and mitigation measures are provided to form a consultation report, so as to guide production.

Embodiment 2

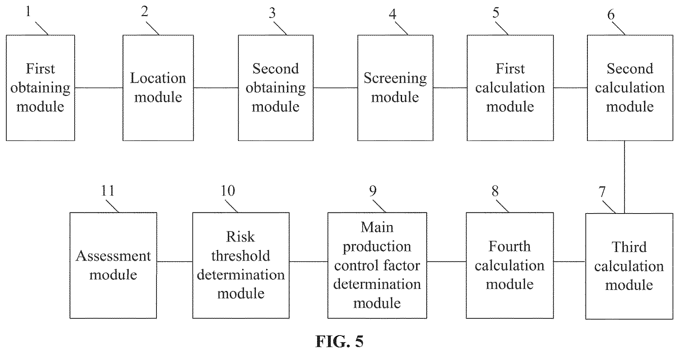

The present disclosure further provides a system for assessing a potential disaster risk in real time to optimize hydraulic-fracturing engineering parameters. As shown in FIG. 5, the system includes:

a first obtaining module 1 configured to obtain, by taking a target shale gas or geothermal development platform as a center, earthquake data in a process of shale gas or geothermal exploitation in a target region in real time by means of near-field monitoring, where the earthquake data of the target region is three-component continuous waveform data monitored by an earthquake monitoring apparatus;

a location module 2 configured to locate each earthquake event according to the earthquake data to obtain cluster information of each earthquake event, and infer a spatial distribution form and a geometric dimension of a fracture and a spatial distribution form and a geometric dimension of a fault according to the cluster information;

a second obtaining module 3 configured to obtain production factor data of a construction unit in the process of shale gas or geothermal exploitation in the target region and casing deformation data occurring in a process of single well fracturing in real time, where the production factor data includes a fluid injection volume, a fluid injection rate, a real-time bottom hole pressure, a fluid flowback amount and injected fluid properties, and the casing deformation data includes casing deformation time, a casing deformation location, a casing deformation amount, a casing inner diameter and a maximum diameter of a milling tool;

a screening module 4 configured to construct a space-time relation fitter, and screen, according to the cluster information of each earthquake event, earthquake events satisfying a set condition on the basis of the space-time relation fitter to obtain an induced earthquake time series dataset;

a first calculation module 5 configured to calculate a first linear correlation coefficient and a first nonlinear correlation coefficient of each of the production factor data and the induced earthquake time series dataset, and a second linear correlation coefficient and a second nonlinear correlation coefficient of each of the production factor data and the casing deformation data;

a second calculation module 6 configured to calculate a first regression coefficient of each of the production factor data and the induced earthquake time series dataset and a second regression coefficient of each of the production factor data and the casing deformation data with a multiple regression model;

a third calculation module 7 configured to calculate a first importance weight of each of the production factor data to the induced earthquake time series dataset with a weighted average according to the first linear correlation coefficient, the first nonlinear correlation coefficient and the first regression coefficient;

a fourth calculation module 8 configured to calculate a second importance weight of each of the production factor data to the casing deformation data with a weighted average according to the second linear correlation coefficient, the second nonlinear correlation coefficient and the second regression coefficient;

a main production control factor determination module 9 configured to determine a main production control factor according to the first importance weight and the second importance weight;

a risk threshold determination module 10 configured to construct a multi-field coupled numerical model, and determine a risk threshold of the main production control factor of the target region on the basis of the multi-field coupled numerical model, where the multi-field coupled numerical model includes a three-dimensional geological structure model including fault risk parameters and a multi-field coupled constitutive equation of a hydraulic fracturing flow field-fault slip force field; and

an assessment module 11 configured to assess a potential earthquake risk in real time on the basis of the risk threshold of the main production control factor.

Embodiment 3

The embodiment of the present disclosure provides an electronic device. The electronic device includes a memory and a processor, where the memory is configured to store a computer program, and the processor runs the computer program to cause the electronic device to execute the method for assessing a potential disaster risk in real time to optimize hydraulic-fracturing engineering parameters of Embodiment 1. Alternatively, the electronic device described above may be a server. In addition, the embodiment of the present disclosure further provides a computer readable storage medium storing a computer program. The computer program implements the method for assessing a potential disaster risk in real time to optimize hydraulic-fracturing engineering parameters of Embodiment 1 when executed by a processor.

**Claims**

1. A method for assessing a potential disaster risk in real time to optimize hydraulic-fracturing engineering parameters, comprising:

obtaining (S1), by taking a target shale gas or geothermal development platform as a center, earthquake data in a process of shale gas or geothermal exploitation in a target region in real time by means of near-field monitoring, wherein the earthquake data of the target region is three-component continuous waveform data monitored by an earthquake monitoring apparatus;

locating (S2) each earthquake event according to the earthquake data to obtain cluster information of each earthquake event, and inferring a spatial distribution form and a geometric dimension of a fracture and a spatial distribution form and a geometric dimension of a fault according to the cluster information;

obtaining (S3) production factor data of a construction unit in the process of shale gas or geothermal exploitation in the target region and casing deformation data occurring in a process of single well fracturing in real time, wherein the production factor data comprises a fluid injection volume, a fluid injection rate, a real-time bottom hole pressure, a fluid flowback amount and injected fluid properties, and the casing deformation data comprises casing deformation time, a casing deformation location, a casing deformation amount, a casing inner diameter and a maximum diameter of a milling tool;

constructing (S4) a space-time relation fitter, and screening, according to the cluster information of each earthquake event, earthquake events satisfying a set condition on the basis of the space-time relation fitter to obtain an induced earthquake time series dataset;

calculating (S5) a first linear correlation coefficient and a first nonlinear correlation coefficient of each of the production factor data and the induced earthquake time series dataset, and a second linear correlation coefficient and a second nonlinear correlation coefficient of each of the production factor data and the casing deformation data;

calculating (S6) a first regression coefficient of each of the production factor data and the induced earthquake time series dataset and a second regression coefficient of each of the production factor data and the casing deformation data with a multiple regression model;

calculating (S7) a first importance weight of each of the production factor data to the induced earthquake time series dataset with a weighted average according to the first linear correlation coefficient, the first nonlinear correlation coefficient and the first regression coefficient;

calculating (S8) a second importance weight of each of the production factor data to the casing deformation data with a weighted average according to the second linear correlation coefficient, the second nonlinear correlation coefficient and the second regression coefficient;

determining (S9) a main production control factor according to the first importance weight and the second importance weight;

constructing (S10) a multi-field coupled numerical model, and determining a risk threshold of the main production control factor of the target region on the basis of the multi-field coupled numerical model, wherein the multi-field coupled numerical model comprises a three-dimensional geological structure model comprising fault risk parameters and a multi-field coupled constitutive equation of a hydraulic fracturing flow field-fault slip force field; and

assessing (S11) a potential earthquake risk in real time on the basis of the risk threshold of the main production control factor.

2. The method for assessing a potential disaster risk in real time to optimize hydraulic-fracturing engineering parameters according to claim 1, wherein the locating (S2) each earthquake event according to the earthquake data of the target region to obtain cluster information of each earthquake event, and inferring a spatial distribution form and a geometric dimension of a fracture and a spatial distribution form and a geometric dimension of a fault according to the cluster information specifically comprise:

carrying out, by using a band-pass filtration method and a wavelet transform method, denoising processing on the three-component continuous waveform data to obtain a continuous signal having a high signal-to-noise ratio;

extracting a three-component waveform signal of each earthquake event according to the continuous signal having a high signal-to-noise ratio;

according to the three-component waveform signal of each earthquake event, determining absolute location of each earthquake event on the basis of a grid search method;

according to the absolute location, determining relative location of each earthquake event on the basis of a double-difference location algorithm;

according to the relative location of each earthquake event, determining the cluster information for each earthquake event on the basis of a cluster distribution of an earthquake; and

according to the cluster information, inferring the spatial distribution form and the geometric dimension of the fracture and the spatial distribution form and the geometric dimension of the fault.

3. The method for assessing a potential disaster risk in real time to optimize hydraulic-fracturing engineering parameters according to claim 1, wherein the calculating (S5) a first linear correlation coefficient and a first nonlinear correlation coefficient of each of the production factor data and the induced earthquake time series dataset, and a second linear correlation coefficient and a second nonlinear correlation coefficient of each of the production factor data and the casing deformation data specifically comprises:

calculating a first globally synchronized Pearson correlation coefficient of each of the production factor data and the induced earthquake time series dataset and a second globally synchronized Pearson correlation coefficient of each of the production factor data and the casing deformation data with a Pearson correlation coefficient method;

according to the first globally synchronized Pearson correlation coefficient, selecting a first set time window to calculate a locally synchronized Pearson correlation coefficient, so as to obtain the first linear correlation coefficient;

according to the second globally synchronized Pearson correlation coefficient, selecting a second set time window to calculate a locally synchronized Pearson correlation coefficient, so as to obtain the second linear correlation coefficient;

calculating a first penalty function value according to each of the production factor data and the induced earthquake time series dataset, and a second penalty function value according to each of the production factor data and the casing deformation data;

calculating the first nonlinear correlation coefficient of each of the production factor data and the induced earthquake time series dataset with an adaptively constrained dynamic time warping algorithm according to the first penalty function value; and

calculating the second nonlinear correlation coefficient of each of the production factor data and the casing deformation data with the adaptively constrained dynamic time warping algorithm according to the second penalty function value.

4. The method for assessing a potential disaster risk in real time to optimize hydraulic-fracturing engineering parameters according to claim 1, wherein the constructing (S10) a multi-field coupled numerical model, and determining a risk threshold of the main production control factor of the target region specifically comprise:

obtaining surface structure information of geological survey of the target region, geophysical exploration information of the target region and drilling information of the target region;

constructing a three-dimensional earthquake structure model of the target region according to the cluster information of each earthquake event, the surface structure information, the geophysical exploration information of the target region and the drilling information of the target region, wherein the three-dimensional earthquake structure model of the target region comprises a three-dimensional geological model of an activated fault and a three-dimensional geological model of a fault to be activated;

calculating a slip tendency and a risk value of each fault with principal stress parameters and a quantitative risk assessment method according to geometric shapes of the three-dimensional geological model of the activated fault and the three-dimensional geological model of the fault to be activated;

obtaining the three-dimensional geological structure model comprising fault risk parameters according to the slip tendency and the risk value of each fault and the three-dimensional earthquake structure model of the target region;

inputting the main production control factor as a disturbance term of a regional stress field into the three-dimensional geological structure model comprising fault risk parameters to obtain a stress field distribution in an inversion source region;

constructing a hydraulic fracture propagation model based on a main production control factor by using an elastic equation;

calculating a flow field in a fracture after initiation of a hydraulic fracture according to the main production control factor and the hydraulic fracture propagation model based on a main production control factor;

constructing the multi-field coupled constitutive equation of the hydraulic fracturing flow field-fault slip force field; and

according to the multi-field coupled constitutive equation of the hydraulic fracturing flow field-fault slip force field, the stress field distribution in the inversion source region and the flow field in the fracture after initiation of the hydraulic fracture, determining the risk threshold of the main production control factor in the target region by means of forward modeling.

5. The method for assessing a potential disaster risk in real time to optimize hydraulic-fracturing engineering parameters according to claim 4, wherein the according to the multi-field coupled constitutive equation of the hydraulic fracturing flow field-fault slip force field, the stress field distribution in the inversion source region and the flow field in the fracture after initiation of the hydraulic fracture, determining the risk threshold of the main production control factor in the target region by means of forward modeling specifically comprises:

according to the multi-field coupled constitutive equation of the hydraulic fracturing flow field-fault slip force field, the stress field distribution of the inversion source region, the flow field in the fracture after initiation of the hydraulic fracture and the three-dimensional geological structure model comprising fault risk parameters, determining a theoretical main production control factor by means of forward modeling;

when the theoretical main production control factor is inconsistent with the main production control factor, updating the main production control factor and the theoretical main production control factor according to the current earthquake data of the target region and the current production factor data to obtain an updated main production control factor and an updated theoretical main production control factor; and

determining the risk threshold of the main production control factor of the target region when the theoretical main production control factor is consistent with the main production control factor.

6. The method for assessing a potential disaster risk in real time to optimize hydraulic-fracturing engineering parameters according to claim 4, further comprising:

adjusting the main production control factor according to the risk threshold of the main production control factor, so as to make the main production control factor less than the risk threshold.

7. The method for assessing a potential disaster risk in real time to optimize hydraulic-fracturing engineering parameters according to claim 1, wherein the assessing (S11) a potential earthquake risk in real time on the basis of the risk threshold of the main production control factor specifically comprises:

when the main production control factor is less than the risk threshold, determining that no potential earthquake risk exists in the process of shale gas or geothermal exploitation in the target region; and
when the main production control factor is not less than the risk threshold, determining that the potential earthquake risk exists in the process of shale gas or geothermal exploitation in the target region.

8. A system for assessing a potential disaster risk in real time to optimize hydraulic-fracturing engineering parameters, comprising:

a first obtaining module (1) configured to obtain, by taking a target shale gas or geothermal development platform as a center, earthquake data in a process of shale gas or geothermal exploitation in a target region in real time by means of near-field monitoring, wherein the earthquake data of the target region is three-component continuous waveform data monitored by an earthquake monitoring apparatus;
a location module (2) configured to locate each earthquake event according to the earthquake data to obtain cluster information of each earthquake event, and infer a spatial distribution form and a geometric dimension of a fracture and a spatial distribution form and a geometric dimension of a fault according to the cluster information;
a second obtaining module (3) configured to obtain production factor data of a construction unit in the process of shale gas or geothermal exploitation in the target region and casing deformation data occurring in a process of single well fracturing in real time, wherein the production factor data comprises a fluid injection volume, a fluid injection rate, a real-time bottom hole pressure, a fluid flowback amount and injected fluid properties, and the casing deformation data comprises casing deformation time, a casing deformation location, a casing deformation amount, a casing inner diameter and a maximum diameter of a milling tool;
a screening module (4) configured to construct a space-time relation fitter, and screen, according to the cluster information of each earthquake event, earthquake events satisfying a set condition on the basis of the space-time relation fitter to obtain an induced earthquake time series dataset;
a first calculation module (5) configured to calculate a first linear correlation coefficient and a first nonlinear correlation coefficient of each of the production factor data and the induced earthquake time series dataset, and a second linear correlation coefficient and a second nonlinear correlation coefficient of each of the production factor data and the casing deformation data;
a second calculation module (6) configured to calculate a first regression coefficient of each of the production factor data and the induced earthquake time series dataset and a second regression coefficient of each of the production factor data and the casing deformation data with a multiple regression model;
a third calculation module (7) configured to calculate a first importance weight of each of the production factor data to the induced earthquake time series dataset with a weighted average according to the first linear correlation coefficient, the first nonlinear correlation coefficient and the first regression coefficient;
a fourth calculation module (8) configured to calculate a second importance weight of each of the production factor data to the casing deformation data with a weighted average according to the second linear correlation coefficient, the second nonlinear correlation coefficient and the second regression coefficient;
a main production control factor determination module (9) configured to determine a main production control factor according to the first importance weight and the second importance weight;
a risk threshold determination module (10) configured to construct a multi-field coupled numerical model, and determine a risk threshold of the main production control factor of the target region on the basis of the multi-field coupled numerical model, wherein the multi-field coupled numerical model comprises a three-dimensional geological structure model comprising fault risk parameters and a multi-field coupled constitutive equation of a hydraulic fracturing flow field-fault slip force field; and
an assessment module (11) configured to assess a potential earthquake risk in real time on the basis of the risk threshold of the main production control factor.

9. An electronic device, comprising a memory and a processor, wherein the memory is configured to store a computer program, and the processor runs the computer program to cause the electronic device to execute the method for assessing a potential disaster risk in real time to optimize hydraulic-fracturing engineering parameters according to any one of claims 1-7.

**10.** A computer readable storage medium storing a computer program, wherein the computer program implements the method for assessing a potential disaster risk in real time to optimize hydraulic-fracturing engineering parameters according to any one of claims 1-7 when executed by a processor.

**Patentansprüche**

**1.** Ein Verfahren zur Bewertung eines potenziellen Katastrophenrisikos in Echtzeit zur Optimierung von hydraulischen Frakturierungs-Konstruktions-Parametern umfassend:

Bestimmung (S1),
indem man eine Ziel-Entwicklungsplattform für Schiefergas-Erschließung oder Geothermie-Erschließung als Zentrum nimmt, Erdbebendaten in einem Prozess der Schiefergas-Ausbeutung oder Geothermie-Ausbeutung in einer Zielregion in Echtzeit mittels Nahfeldüberwachung, wobei die Erdbebendaten der Zielregion kontinuierliche Drei-Komponenten-Wellenformdaten sind, die von einer Erdbeben-Überwachungs-Vorrichtung beobachtet werden;
Ortung (S2)
jedes Erdbeben-Ereignis gemäß den Erdbebendaten, um Cluster-Information jedes Erdbeben-Ereignisses zu erhalten, und Ableiten einer räumlichen Verteilungsform und einer geometrischen Dimension eines Bruchs und einer räumlichen Verteilungsform und einer geometrischen Dimension einer Verwerfung gemäß der Cluster-Information;
Beschaffung (S3)
Produktions-Faktor-Daten einer Konstruktions-Einheit in dem Prozess der Schiefergas-Ausbeutung oder Geothermie-Ausbeutung in der Zielregion und Gehäuse-Verformungs-Daten, die in einem Prozess der Einzel-Bohrloch-Frakturierung in Echtzeit auftreten, wobei die Produktions-Faktor-Daten ein Fluidinjektions-Volumen, eine Fluidinjektions-Rate, einen Echtzeit-Bohrlochdruck, eine Fluid-Rückflussmenge und injizierte Fluideigenschaften umfassen, und die Gehäuse-Verformungs-Daten die Gehäuse-Verformungs-Zeit, einen Gehäuse-Verformungs-Ort, einen Gehäuse-Verformungs-Betrag, einen inneren Gehäuse-Durchmesser und einen maximalen Durchmesser eines Fräswerkzeugs umfassen;
Konstruieren (S4)
einen Raum-Zeit-Beziehungs-Fitter und ein Screening gemäß der Cluster-Information jedes Erdbeben-Ereignisses, Erdbeben-Ereignisse, die eine bestimmte Bedingung auf der Grundlage des Raum-Zeit-Beziehungs-Fitters erfüllen, um einen induzierten Erdbeben-Zeit-Reihen-Datensatz zu erhalten;
Berechnung (S5)
einen ersten linearen Korrelationskoeffizienten und einen ersten nichtlinearen Korrelationskoeffizienten eines jeden der Produktions-Faktor-Daten und des induzierten Erdbeben-Zeit-Reihen-Datensatzes und einen zweiten linearen Korrelationskoeffizienten und einen zweiten nichtlinearen Korrelationskoeffizienten eines jeden der Produktions-Faktor-Daten und der Gehäuse-Verformungs-Daten;
Berechnung (S6)
einen ersten Regressionskoeffizienten eines jeden der Produktions-Faktor-Daten und des induzierten Erdbeben-Zeit-Reihen-Datensatzes und einen zweiten Regressionskoeffizienten eines jeden der Produktions-Faktor-Daten und der Gehäuse-Verformungs-Daten mit einem Mehrfachregressionsmodell;
Berechnung (S7)
eine erste Signifikanz-Gewichtung eines jeden der Produktions-Faktor-Daten zu dem induzierten Erdbeben-Zeit-Reihen-Datensatz mit einem gewichteten Durchschnitt gemäß dem ersten linearen Korrelationskoeffizienten, dem ersten nichtlinearen Korrelationskoeffizienten und dem ersten Regressionskoeffizienten;
Berechnung (S8)
eine zweite Signifikanz-Gewichtung eines jeden der Produktions-Faktor-Daten zu den Gehäuse-Verformungs-Daten mit einem gewichteten Durchschnitt gemäß dem zweiten linearen Korrelationskoeffizienten, dem zweiten nichtlinearen Korrelationskoeffizienten und dem zweiten Regressionskoeffizienten;
Bestimmung (S9)
einen Haupt-Produktions-Kontrollfaktor gemäß der ersten Signifikanz-Gewichtung und der zweiten Signifikanz-Gewichtung;
Konstruktion (S10)
ein gekoppeltes numerisches Mehrfeld-Modell und Bestimmung einer Risikoschwelle des Haupt-Produktions-Kontrollfaktors der Zielregion auf der Grundlage des gekoppelten numerischen Mehrfeld-Modells, wobei das gekoppelte numerische Mehrfeld-Modell ein dreidimensionales geologisches Strukturmodell umfasst, das Verwerfungs-Risikoparameter und eine gekoppelte konstitutive Mehrfeld-Gleichung eines hydraulischen-Frakturierung-Flussfeld-Verwerfungs-Schlupf-Kraftfeldes umfasst; und
Bewertung (S11)
eines potenziellen Erdbebenrisikos in Echtzeit auf der Grundlage der Risikoschwelle des Haupt-Produktions-Kontrollfaktors.

2. Das Verfahren zur Bewertung eines potenziellen Katastrophenrisikos in Echtzeit zur Optimierung von hydraulischen Frakturierungs-Konstruktions-Parametern gemäß Anspruch 1, wobei das Orten (S2) jedes Erdbeben-Ereignisses gemäß den Erdbebendaten der Zielregion, um Clusterinformation jedes Erdbeben-Ereignisses zu erhalten, und Ableiten einer räumlichen Verteilungsform und einer geometrischen Dimension eines Bruchs und einer räumlichen Verteilungsform und einer geometrischen Dimension einer Verwerfung gemäß der Clusterinformation spezifisch umfasst:

Durchführung einer Entrauschungs-Verarbeitung der kontinuierlichen Drei-Komponenten-Wellenformdaten unter Verwendung einer Bandpassfilterungs-Methode und einer Wavelet-Transformations-Methode, um ein kontinuierliches Signal mit einem hohen Signal-Rausch-Verhältnis zu erhalten;
Extrahieren eines Drei-Komponenten-Wellenformsignals eines jeden Erdbeben-Ereignisses gemäß dem kontinuierlichen Signal mit dem hohen Signal-Rausch-Verhältnis;
gemäß dem Drei-Komponenten-Wellenformsignal jedes Erdbebenereignisses Bestimmung des absoluten Orts eines jeden Erdbeben-Ereignisses auf der Grundlage eines Gitter-Such-Verfahrens;
gemäß dem absoluten Ort Bestimmung des relativen Standorts eines jeden Erdbeben-Ereignisses auf der Grundlage eines Doppel-Differenz-Lokalisierungs-Algorithmus;
gemäß dem relativen Ort eines jeden Erdbeben-Ereignisses Bestimmung der Cluster-Information für jedes Erdbebenereignis auf der Grundlage einer Cluster-Verteilung eines Erdbebens; und
gemäß der der Cluster-Information Ableiten der räumlichen Verteilungsform und der geometrischen Dimension des Bruchs und der räumlichen Verteilungsform und der geometrischen Dimension der Verwerfung.

3. Das Verfahren zur Bewertung eines potenziellen Katastrophenrisikos in Echtzeit zur Optimierung von hydraulischen Frakturierungs-Konstruktions-Parametern gemäß Anspruch 1, wobei das Berechnen (S5) eines ersten linearen Korrelationskoeffizienten und eines ersten nichtlinearen Korrelationskoeffizienten eines jeden der Produktions-Faktor-Daten und des induzierten Erdbeben-Zeit-Reihen-Datensatzes, und eines zweiten linearen Korrelationskoeffizienten und eines zweiten nichtlinearen Korrelationskoeffizienten eines jeden der Produktions-Faktor-Daten und der Gehäuse-Verformungs-Daten spezifisch umfasst:

Berechnen eines ersten global synchronisierten Pearson-Korrelationskoeffizienten eines jeden der Produktions-Faktor-Daten und des induzierten Erdbeben-Zeit-Reihen-Datensatzes und eines zweiten global synchronisierten Pearson-Korrelationskoeffizienten eines jeden der Produktions-Faktor-Daten und der Gehäuse-Verformungs-Daten mit einer Pearson-Korrelationskoeffizienten-Methode;
gemäß dem ersten global synchronisierten Pearson-Korrelationskoeffizienten, Auswahl eines ersten festgelegten Zeitfensters zur Berechnung eines lokal synchronisierten Pearson-Korrelationskoeffizienten, um den ersten linearen Korrelationskoeffizienten zu erhalten;
gemäß dem zweiten global synchronisierten Pearson-Korrelationskoeffizienten Auswahl eines zweiten festgelegten Zeitfensters zur Berechnung eines lokal synchronisierten Pearson-Korrelationskoeffizienten, um den zweiten linearen Korrelationskoeffizienten zu erhalten;
Berechnen eines ersten Straf-Funktionswertes gemäß eines jeden der Produktions-Faktor-Daten und des induzierten Erdbeben-Zeit-Reihen-Datensatzes und eines zweiten Straf-Funktionswertes gemäß eines jeden der Produktions-Faktor-Daten und der Gehäuse-Verformungs-Daten;
Berechnen des ersten nichtlinearen Korrelationskoeffizienten eines jeden der Produktions-Faktor-Daten und des induzierten Erdbeben-Zeit-Reihen-Datensatzes mit einem adaptiv eingeschränkten dynamischen Zeit-Warping-Algorithmus gemäß dem ersten Straf-Funktionswert; und
Berechnen des zweiten nichtlinearen Korrelationskoeffizienten eines jeden der Produktions-Faktor-Daten und der Gehäuse-Verformungs-Daten mit dem adaptiv eingeschränkten dynamischen Zeit-Warping-Algorithmus gemäß dem zweiten Straf-Funktionswert.

4. Das Verfahren zur Bewertung eines potenziellen Katastrophenrisikos in Echtzeit zur Optimierung von hydraulischen Frakturierungs-Konstruktions-Parametern gemäß Anspruch 1, wobei die Konstruktion (S10) eines gekoppelten numerischen Mehrfeld-Modells und Bestimmung einer Risikoschwelle des Haupt-Produktions-Kontrollfaktors der Zielregion spezifisch umfasst:

Beschaffung von Oberflächenstruktur-Information der geologischen Untersuchung der Zielregion, von geophysikalischer Erkundungsinformation der Zielregion und von Bohrinformation der Zielregion;

Konstruieren eines dreidimensionalen Erdbebenstruktur-Modells der Zielregion gemäß der Clusterinformation eines jeden Erdbeben-Ereignisses, der Oberflächenstruktur-Information, der geophysikalischen Erkundungsinformation der Zielregion und der Bohrinformation der Zielregion, wobei das dreidimensionale Erdbebenstruktur-Modell der Zielregion ein dreidimensionales geologisches Modell einer aktivierten Verwerfung und ein dreidimensionales geologisches Modell einer zu aktivierenden Verwerfung umfasst;

Berechnung einer Schlupftendenz und eines Risikowerts einer jeden Verwerfung mit Hauptspannungs-Parametern und einer quantitativen Risikobewertungs-Methode entsprechend den geometrischen Formen des dreidimensionalen geologischen Modells der aktivierten Verwerfung und des dreidimensionalen geologischen Modells der zu aktivierenden Verwerfung;

Bestimmung des dreidimensionalen geologischen Strukturmodells umfassend Verwerfungs-Risiko-Parameter entsprechend der Schlupftendenz und dem Risikowert einer jeder Verwerfung und des dreidimensionalen Erdbebenstruktur-Modells der Zielregion;

Eingabe des Haupt-Produktions-Kontrollfaktors als Stör-Term eines regionalen Spannungsfeldes in das dreidimensionale geologische Strukturmodell umfassend Verwerfungsrisikoparameter, um eine Spannungsfeldverteilung in einer Inversionsquellenregion zu erhalten;

Konstruktion eines hydraulischen Frakturierungs-Ausbreitungs-Modells auf der Grundlage eines Haupt-Produktions-Kontrollfaktors unter Verwendung einer elastischen Gleichung;

Berechnung eines Strömungsfeldes in einer Frakturierung nach der Einleitung einer hydraulischen Frakturierung gemäß dem Haupt-Produktions-Kontrollfaktor und dem hydraulischen Frakturierungs-Ausbreitungs-Modell basierend auf einem Haupt-Produktions-Kontrollfaktor;

Konstruktion der gekoppelten konstitutiven Mehrfeld-Gleichung des hydraulischen Frakturierung-Flussfeld-Verwerfungs-Schlupf-Kraftfeldes; und

gemäß der gekoppelten konstitutiven Mehrfeld-Gleichung des hydraulischen Frakturierung-Flussfeld-Verwerfungs-Schlupf-Kraftfeldes, der Spannungsfeldverteilung in der Inversionsquellenregion und des Flussfeldes in der Frakturierung nach der Initiierung der hydraulischen Frakturierung, Bestimmung der Risikoschwelle des Haupt-Produktions-Kontrollfaktors in der Zielregion durch Vorwärts-Modellierung.

5. Das Verfahren zur Bewertung eines potenziellen Katastrophenrisikos in Echtzeit zur Optimierung von hydraulischen Frakturierungs-Konstruktions-Parametern gemäß Anspruch 4, wobei das Bestimmen der Risikoschwelle des Haupt-Produktions-Kontrollfaktors in der Zielregion mittels Vorwärtsmodellierung gemäß der gekoppelten konstitutiven Mehrfeld-Gleichung des hydraulischen Frakturierung-Flussfeld-Verwerfungs-Schlupf-Kraftfeldes, der Spannungsfeldverteilung in der Inversionsquellenregion und des Flussfeldes in der Fraktur nach der Initiierung der hydraulischen Frakturierung spezifisch umfasst:

Bestimmung eines theoretischen Haupt-Produktions-Kontrollfaktors mittels Vorwärts-Modellierung entsprechend der gekoppelten konstitutiven Mehrfeld-Gleichung des hydraulischen Frakturierung-Flussfeld-Verwerfungs-Schlupf-Kraftfeldes, der Spannungsfeldverteilung der Inversionsquellenregion, des Strömungsfeldes in der Frakturierung nach der Initiierung der hydraulischen Frakturierung und des dreidimensionalen geologischen Strukturmodells, das Verwerfungsrisikoparameter umfasst;

wenn der theoretische Haupt-Produktions-Kontrollfaktor nicht konsistent ist mit dem Haupt-Produktions-Kontrollfaktor, Aktualisieren des Haupt-Produktions-Kontrollfaktors und des theoretischen Haupt-Produktions-Kontrollfaktors gemäß den aktuellen Erdbebendaten der Zielregion und den aktuellen Produktions-Faktor-Daten, um einen aktualisierten Haupt-Produktions-Kontrollfaktor und einen aktualisierten theoretischen Haupt-Produktions-Kontrollfaktor zu erhalten; und

Bestimmung der Risikoschwelle für den Haupt-Produktions-Kontrollfaktor der Zielregion, wenn der theoretische Haupt-Produktions-Kontrollfaktor mit dem Haupt-Produktions-Kontrollfaktor übereinstimmt.

6. Das Verfahren zur Bewertung eines potenziellen Katastrophenrisikos in Echtzeit zur Optimierung von hydraulischen Frakturierungs-Konstruktions-Parametern gemäß Anspruch 4, ferner umfassend:
Anpassung des Haupt-Produktions-Kontrollfaktors gemäß der Risikoschwelle des Haupt-Produktions-Kontrollfaktors, so dass der Haupt-Produktions-Kontrollfaktor unter der Risikoschwelle liegt.

7. Das Verfahren zur Bewertung eines potenziellen Erdbebenrisikos in Echtzeit zur Optimierung von hydraulischen Frakturierungs-Konstruktions-Parametern gemäß Anspruch 1, wobei die Bewertung (S11) eines potenziellen Erdbebenrisikos in Echtzeit auf der Grundlage der Risikoschwelle des Haupt-Produktions-Kontrollfaktors spezifisch umfasst:

wenn der Haupt-Produktions-Kontrollfaktor unter der Risikoschwelle liegt, die Feststellung, dass im Prozess der Schiefergas-Ausbeutung oder Erdwärme-Ausbeutung in der Zielregion kein potenzielles Erdbebenrisiko besteht; und

wenn der Haupt-Produktions-Kontrollfaktor nicht unter der Risikoschwelle liegt, die Feststellung, dass im Prozess der Schiefergas-Ausbeutung oder Erdwärme-Ausbeutung in der Zielregion ein potenzielles Erdbebenrisiko besteht.

8. System zur Bewertung eines potenziellen Katastrophenrisikos in Echtzeit zur Optimierung der hydraulischen Frakturierungs-Konstruktions-Parameter umfassend:

ein erstes Bestimmungs-Modul (1)
konfiguriert, durch Nehmen einer Ziel-Entwicklungsplattform für Schiefergas oder Geothermie als Zentrum, Erdbebendaten in einem Prozess der Schiefergas-Ausbeutung oder Geothermie-Ausbeutung in einer Zielregion in Echtzeit mittels Nahfeldüberwachung, wobei die Erdbebendaten der Zielregion kontinuierliche Drei-Komponenten-Wellenformdaten sind, die von einer Erdbeben-Überwachungs-Vorrichtung beobachtet werden;
ein Ortungs-Modul (2)
konfiguriert, um jedes Erdbeben-Ereignis entsprechend der Erdbebendaten zu lokalisieren, um Cluster-Information eines jeden Erdbeben-Ereignisses zu erhalten, und Ableitung einer räumlichen Verteilungsform und einer geometrischen Dimension eines Bruchs und einer räumlichen Verteilungsform und einer geometrischen Dimension einer Verwerfung gemäß der Cluster-Information;
ein zweites Bestimmungs-Modul (3)
konfiguriert, um Produktions-Faktor-Daten einer Konstruktions-Einheit zu erhalten im Prozess der Schiefergas-Ausbeute oder Geothermie-Ausbeute in der Zielregion und Gehäuse-Verformungs-Daten, die in einem Prozess der Einzel-Bohrloch-Frakturierung in Echtzeit auftreten, wobei die Produktions-Faktor-Daten ein Fluidinjektions-Volumen, eine Fluidinjektions-Rate, einen Echtzeit-Bohrlochdruck, eine Fluid-Rückflussmenge und injizierte Fluideigenschaften umfassen, und die Gehäuse-Verformungs-Daten die Gehäuse-Verformungs-Zeit, einen Gehäuse-Verformungs-Ort, einen Gehäuse-Verformungsbetrag, einen inneren Gehäuse-Durchmesser und einen maximalen Durchmesser eines Fräswerkzeugs umfassen;
ein Screening-Modul (4)
konfiguriert zur Konstruktion eines Raum-Zeit-Beziehungs-Fitters und Screening entsprechend der Cluster-Information eines jeden Erdbeben-Ereignisses, Erdbeben-Ereignisse, die eine bestimmte Bedingung erfüllen auf der Grundlage des Raum-Zeit-Beziehungs-Fitters, um einen induzierten Erdbeben-Zeit-Reihen-Datensatz zu erhalten;
ein erstes Berechnungsmodul (5)
konfiguriert zur Berechnung eines ersten linearen Korrelationskoeffizienten und eines ersten nichtlinearen Korrelationskoeffizienten eines jeden der Produktions-Faktor-Daten und des induzierten Erdbeben-Zeit-Reihen-Datensatzes und eines zweiten linearen Korrelationskoeffizienten und eines zweiten nichtlinearen Korrelationskoeffizienten eines jeden der Produktions-Faktor-Daten und der Gehäuse-Verformungs-Daten;
ein zweites Berechnungsmodul (6)
konfiguriert zur Berechnung eines ersten Regressionskoeffizienten eines jeden der Produktions-Faktor-Daten und des induzierten Erdbeben-Zeit-Reihen-Datensatzes und eines zweiten Regressionskoeffizienten eines jeden der Produktions-Faktor-Daten und der Gehäuse-Verformungs-Daten mit einem Mehrfachregressionsmodell;
ein drittes Berechnungsmodul (7)
konfiguriert zur Berechnung einer ersten Signifikanz-Gewichtung eines jeden der Produktions-Faktor-Daten mit dem induzierten Erdbeben-Zeit-Reihen-Datensatz mit einem gewichteten Durchschnitt gemäß dem ersten linearen Korrelationskoeffizienten, dem ersten nichtlinearen Korrelationskoeffizienten und dem ersten Regressionskoeffizienten;
ein viertes Berechnungsmodul (8)
konfiguriert zur Berechnung einer zweiten Signifikanz-Gewichtung eines jeden der Produktions-Faktor-Daten und der Gehäuse-Verformungs-Daten mit einem gewichteten Durchschnitt gemäß dem zweiten linearen Korrelationskoeffizienten, dem zweiten nichtlinearen Korrelationskoeffizienten und dem zweiten Regressionskoeffizienten;
ein Modul zur Bestimmung der Haupt-Produktions-Kontrollfaktoren (9) konfiguriert zur Bestimmung eines Haupt-Produktions-Kontrollfaktors gemäß der ersten Signifikanz-Gewichtung und der zweiten Signifikanz-Gewichtung;
ein Modul zur Bestimmung der Risikoschwelle (10)
konfiguriert zur Konstruktion eines gekoppelten numerischen Mehrfeld-Modells, und Bestimmen einer Risikoschwelle des Haupt-Produktions-Kontrollfaktors der Zielregion auf der Basis des gekoppelten numerischen Mehrfeld-Modells, wobei das gekoppelte numerische Mehrfeld-Modell ein dreidimensionales geologisches Strukturmodell umfasst, das Verwerfungsrisikoparameter und eine gekoppelte konstitutive Mehrfeld-Gleichung eines hydraulischen Frakturierung-Flussfeld-Verwerfungs-Schlupf-Kraftfeldes umfasst; und
ein Bewertungsmodul (11)
konfiguriert zur Bewertung eines potenziellen Erdbebenrisikos in Echtzeit auf der Grundlage der Risikoschwelle des Haupt-Produktions-Kontrollfaktors.

9. Eine Elektronische Vorrichtung, die einen Speicher und einen Prozessor umfasst, wobei der Speicher so konfiguriert ist, dass er ein Computerprogramm speichert, und der Prozessor das Computerprogramm ausführt, um zu bewirken, dass die elektronische Vorrichtung das Verfahren zur Bewertung eines potenziellen Katastrophenrisikos in Echtzeit ausführt, um die hydraulischen Frakturierung-Konstruktions-Parameter gemäß einem der Ansprüche 1 bis 7 zu optimieren.

10. Computerlesbares Speichermedium, das ein Computerprogramm speichert, wobei das Computerprogramm das Verfahren zur Bewertung eines potenziellen Katastrophenrisikos in Echtzeit implementiert, um die hydraulischen Frakturierungs-Konstruktions-Parameter nach einem der Ansprüche 1-7 zu optimieren, wenn es von einem Prozessor ausgeführt wird.

**Revendications**

1. Une méthode pour évaluation un risque de catastrophe potentielle en temps réel pour optimiser les paramètres d'ingénierie de la fracturation hydraulique:

obtenir (S1),
en prenant pour centre une plateforme cible de développement du gaz de schiste ou de la géothermie, les données sur les tremblements de terre dans un processus d'exploitation du gaz de schiste ou de la géothermie dans une région cible en temps réel au moyen d'une surveillance en champ proche, dans laquelle les données sur les tremblements de terre de la région cible étant des données de forme d'onde continue à trois composantes surveillées par un appareil de surveillance des tremblements de terre;
localiser (S2)
chaque événement tremblement de terre en fonction des données sur les tremblements de terre pour obtenir des informations sur les grappes de chaque événement tremblement de terre, et déduire une forme de distribution spatiale et une dimension géométrique d'une fracture et une forme de distribution spatiale et une dimension géométrique d'une faille en fonction des informations sur les grappes;
obtenir (S3)
les données de facteur de production d'une unité de construction dans le processus d'exploitation de gaz de schiste ou de la géothermique dans la région cible et les données de déformation du tubage survenant lors d'un processus fracturation d'un seul puits en temps réel, dans laquelle les données de facteur de production comprenant un volume d'injection de fluide, un taux d'injection de fluide, une pression de fond de trou en temps réel, une quantité de retour de fluide et les propriétés du fluide injecté, et les données de déformation du tubage comprenant le temps de déformation du tubage, un lieu de déformation du tubage, une quantité de déformation du tubage, un diamètre intérieur du tubage et un diamètre maximal d'un outil de fraisage;
construire (S4)
un ajusteur de relations spatio-temporelles, et le criblage, en fonction des informations sur les grappes de chaque événement tremblement de terre, les événements tremblement de terre satisfaisant à une condition donnée sur la base de l'ajustement de relations spatio-temporelles afin d'obtenir un ensemble de données de séries chronologiques sur les tremblement de terre induits;
calculer (S5)
un premier coefficient de corrélation linéaire et un premier coefficient de corrélation non linéaire de chacune des données de facteur de production et de l'ensemble de données de séries chronologiques sur les tremblement de terre induits, et un deuxième coefficient de corrélation linéaire et un deuxième coefficient de corrélation non linéaire de chacune des données de facteur de production et des données de déformation du tubage;
calculer (S6)
un premier coefficient de régression de chacune des données de facteur de production et de l'ensemble de données de séries chronologiques sur les tremblements de terre induits et un second coefficient de régression de chacune des données de facteur de production et des données de déformation du tubage à l'aide d'un modèle de régression multiple;

calculer (S7)

une première poids de d'importance de chacune des données de facteur de production aux l'ensemble de données de séries chronologiques sur les tremblements de terre induits avec une moyenne pondérée en fonction du premier coefficient de corrélation linéaire, du premier coefficient de corrélation non linéaire et du premier coefficient de régression;

calculer (S8)

une deuxième poids d'importance de chacune des données de facteur de production aux les données de déformation du tubage avec une moyenne pondérée en fonction du deuxième coefficient de corrélation linéaire, du deuxième coefficient de corrélation non linéaire et du deuxième coefficient de régression;

déterminer (S9)

un facteur principal de contrôle de la production en fonction de la première poids d'importance et le deuxième poids d'importance;

construire (S10)

un modèle numérique couplé à plusieurs champs, et détermination d'un seuil de risque de le facteur principal de contrôle de la production de la région cible sur la base du modèle numérique couplé à plusieurs champs, dans lequel le modèle numérique couplé à plusieurs champs comprend un modèle de structure géologique tridimensionnel comprenant des paramètres de risque de faille et une équation constitutive couplée multi-champs d'un champ d'écoulement de fracturation hydraulique - champ de force de glissement de faille; et

évaluer (S11)

un risque potentiel de tremblement de terre en temps réel sur la base du seuil de risque de la principal facteur de contrôle de la production.

2. La méthode pour évaluer un risque de catastrophe potentielle en temps réel pour optimiser les paramètres d'ingénierie de la fracturation hydraulique selon la revendication 1, dans laquelle la localisation (S2) de chaque événement tremblement de terre selon les données sur les tremblements de terre de la région cible pour obtenir des informations sur les grappes de chaque événement tremblement de terre, et déduire une forme de distribution spatiale et une dimension géométrique d'une fracture et une forme de distribution spatiale et une dimension géométrique d'une faille selon les informations sur les grappes comprend spécifiquement:

en utilisant une méthode de filtrage passe-bande et une méthode de transformée en ondelettes, effectuer un traitement de débruitage sur les données de forme d'onde continue à trois composantes afin d'obtenir un signal continu ayant un rapport signal/bruit élevé;

l'extraction d'un signal de forme d'onde à trois composantes de chaque événement tremblement de terre en fonction du signal continu ayant un rapport signal/bruit élevé ;

en fonction du signal de forme d'onde à trois composantes de chaque événement tremblement de terre, déterminer la localisation absolue de chaque événement tremblement de terre sur la base d'une méthode de recherche par quadrillage;

en fonction de la localisation absolue, déterminer la localisation relative de chaque événement tremblement de terre sur la base d'un algorithme de localisation à double différence;

en fonction de la localisation relative de chaque événement tremblement de terre, déterminer les informations sur les grappes pour chaque événement tremblement de terre sur la base d'une distribution des grappes d'un tremblement de terre; et

en fonction des informations sur les grappes, déduire la forme de distribution spatiale et la dimension géométrique de la fracture et la forme de distribution spatiale et la dimension géométrique de la faille.

3. La méthode pour évaluer un risque de catastrophe potentielle en temps réel pour optimiser les paramètres d'ingénierie de la fracturation hydraulique selon la revendication 1, dans laquelle le calcul (S5) d'un premier coefficient de corrélation linéaire et d'un premier coefficient de corrélation non linéaire de chacune des données de facteur de production et de l'ensemble de données de séries chronologiques sur les tremblement de terre induits, et d'un second coefficient de corrélation linéaire et d'un second coefficient de corrélation non linéaire de chacune des données de facteur de production et des données de déformation de tubage comprend spécifiquement:

calculer d'un premier coefficient de corrélation de Pearson synchronisé au niveau mondial pour chacune des données de facteur de production et de l'ensemble de données de séries chronologiques sur les tremblement de terre induits, et d'un second coefficient de corrélation de Pearson synchronisé au niveau mondial pour chacune des données de facteur de production et des données de déformation du tubage, à l'aide d'une méthode de calcul du coefficient de corrélation de Pearson;

en fonction du premier coefficient de corrélation de Pearson synchronisé au niveau mondial, sélectionner une première fenêtre temporelle pour calculer un coefficient de corrélation de Pearson synchronisé au niveau local, afin d'obtenir le premier coefficient de corrélation linéaire;

en fonction du deuxième coefficient de corrélation de Pearson synchronisé au niveau mondial, sélectionner une deuxième fenêtre temporelle pour calculer un coefficient de corrélation de Pearson synchronisé au niveau local, afin d'obtenir le deuxième coefficient de corrélation linéaire;

calculer une première valeur de fonction de pénalité en fonction de chacune des données de facteur de production et de l'ensemble de données de séries chronologiques sur les tremblement de terre induits, et une deuxième valeur de fonction de pénalité en fonction de chacune des données de facteur de production et des données de déformation du tubage;

calculer le premier coefficient de corrélation non linéaire de chacune des données de facteur de production et de l'ensemble de données de séries chronologiques sur les tremblements de terre induits à l'aide de l'algorithme de déformation temporelle dynamique sous contrainte adaptative en fonction de la première valeur de fonction de pénalité; et

calculer le deuxième coefficient de corrélation non linéaire de chacune des données de facteur de production et des données de déformation du tubage à l'aide de l'algorithme de déformation temporelle dynamique sous contrainte adaptative en fonction de la deuxième valeur de fonction de pénalité.

4. La méthode pour évaluer un risque de catastrophe potentielle en temps réel pour optimiser les paramètres d'ingénierie de la fracturation hydraulique selon la revendication 1, dans laquelle la construction (S10) d'un modèle numérique couplé multi-champs et la détermination d'un seuil de risque du principal facteur de contrôle de la production de la région cible comprend spécifiquement:

obtenir des informations sur la structure de la surface à partir de l'étude géologique de la région cible, des informations sur l'exploration géophysique de la région cible et des informations sur le forage de la région cible;

construire un modèle tridimensionnel de structure tremblement de terre de la région cible en fonction des informations sur les grappes de chaque événement tremblement de terre, des informations sur la structure de la surface, des informations sur l'exploration géophysique de la région cible et des informations sur le forage de la région cible, dans laquelle le modèle tridimensionnel de structure tremblement de terre de la région cible comprenant un modèle géologique tridimensionnel de la faille activée et un modèle géologique tridimensionnel de la faille à activer,

calculer une tendance au glissement et une valeur de risque pour chaque faille à l'aide de paramètres de contrainte principale et d'une méthode d'évaluation quantitative du risque en fonction des formes géométriques du modèle géologique tridimensionnel de la faille activée et du modèle géologique tridimensionnel de la faille à activer;

obtenir le modèle de structure géologique tridimensionnelle comprenant les paramètres de risque de faille en fonction de la tendance au glissement et de la valeur de risque de chaque faille et le modèle de structure tremblement de terre tridimensionnelle de la région cible;

introduire le facteur principal de contrôle de la production en tant que terme de perturbation d'un champ de contraintes régional dans le modèle de structure géologique tridimensionnel comprenant des paramètres de risque de faille afin d'obtenir une distribution du champ de contraintes dans une région source d'inversion;

construire un modèle de propagation des fractures hydrauliques basé sur un facteur principal de contrôle de la production en utilisant une équation élastique ;

calculer un champ d'écoulement dans une fracture après l'initiation d'une fracture hydraulique en fonction du facteur principal de contrôle de la production et du modèle de propagation de la fracture hydraulique basé sur un facteur principal de contrôle de la production;

construire l'équation constitutive couplée multi-champs d'un champ d'écoulement de fracturation hydraulique - champ de force de glissement de faille; et

selon l'équation constitutive couplée multi-champs du champ d'écoulement de fracturation hydraulique - champ de force de glissement de la faille, la distribution du champ de contrainte dans la région source de l'inversion et le champ d'écoulement dans la fracture après l'initiation de la fracture hydraulique, déterminer le seuil de risque du facteur principal de contrôle de la production dans la région cible au moyen d'une modélisation à terme.

5. La méthode pour évaluer un risque de catastrophe potentielle en temps réel pour optimiser les paramètres d'ingénierie de la fracturation hydraulique selon la revendication 4, dans laquelle, selon l'équation constitutive couplée multi-champs du champ d'écoulement de fracturation hydraulique - champ de force de glissement de faille, la distribution du champ de contrainte dans la région source d'inversion et le champ d'écoulement dans la fracture après l'initiation de la fracture hydraulique, la détermination du seuil de risque du principal facteur de contrôle de la production dans la région cible au moyen d'une modélisation prospective comprend spécifiquement:

selon l'équation constitutive couplée multi-champs du champ d'écoulement de fracturation hydraulique - champ de force de glissement de faille, la distribution du champ de contrainte de la région source d'inversion, le champ d'écoulement dans la fracture après l'initiation de la fracture hydraulique et le modèle de structure géologique tridimensionnelle comprenant des paramètres de risque de faille, déterminer un facteur de contrôle théorique de la production principale au moyen d'une modélisation à terme;

lorsque le facteur principal de contrôle de la production théorique est incompatible avec le facteur principal de contrôle de la production, mettre à jour le facteur principal de contrôle de la production et le facteur principal de contrôle de la production théorique en fonction des données actuelles sur les tremblements de terre de la région cible et des données actuelles de facteur de production afin d'obtenir un facteur principal de contrôle de la production mis à jour et un facteur principal de contrôle de la production théorique mis à jour; et

déterminer le seuil de risque du facteur principal de contrôle de la production de la région cible lorsque le principal facteur de contrôle de la production théorique est compatible avec le principal facteur de contrôle de la production.

6. La méthode pour évaluer un risque de catastrophe potentielle en temps réel pour optimiser les paramètres d'ingénierie de la fracturation hydraulique selon la revendication 4, comprenant en outre :
ajuster le facteur principal de contrôle de la production en fonction du seuil de risque du facteur principal de contrôle de la production, de manière à ce que le facteur principal de contrôle de la production soit inférieur au seuil de risque.

7. La méthode pour évaluer un risque de catastrophe potentielle en temps réel pour optimiser les paramètres d'ingénierie de la fracturation hydraulique selon la revendication 1, dans laquelle l'évaluation (S11) en temps réel d'un risque potentiel de tremblement de terre sur la base du seuil de risque du facteur principal de contrôle de la production comprend spécifiquement:

lorsque le principal facteur de contrôle de la production est inférieur au seuil de risque, déterminer qu'il n'existe aucun risque potentiel de tremblement de terre dans le processus d'exploitation du gaz de schiste ou de la géothermie dans la région cible; et

lorsque le principal facteur de contrôle de la production n'est pas inférieur au seuil de risque, déterminer qu'il existe un risque potentiel de tremblement de terre dans le processus d'exploitation du gaz de schiste ou de la géothermie dans la région cible.

8. Un système pour évaluer un risque de catastrophe potentielle en temps réel pour optimiser les paramètres d'ingénierie de la fracturation hydraulique, comprenant:

un premier module d'obtention (1)
configuré pour obtenir, en prenant comme centre une plateforme cible de développement du gaz de schiste ou de la géothermie, des données sur les tremblements de terre dans un processus d'exploitation du gaz de schiste ou de la géothermie dans une région cible en temps réel au moyen d'une surveillance en champ proche, dans lequel les données sur les tremblements de terre de la région cible étant des données de forme d'onde continue à trois composantes surveillées par un appareil de surveillance des tremblements de terre ;

un module de localisation (2)
configuré pour localiser chaque événement tremblement de terre en fonction des données sur les tremblements de terre afin d'obtenir des informations sur les grappes de chaque événement tremblement de terre, et déduire une forme de distribution spatiale et une dimension géométrique d'une fracture et une forme de distribution spatiale et une dimension géométrique d'une faille en fonction des informations sur les grappes;

un deuxième module d'obtention (3)
configuré pour obtenir des données de facteur de production d'une unité de construction dans le processus d'exploitation du gaz de schiste ou de la géothermie dans la région cible et les données de déformation du tubage survenant lors d'un processus fracturation d'un seul puits en temps réel, dans lequel les données de facteur de production comprenant un volume d'injection de fluide, un taux d'injection de fluide, une pression de fond de trou en temps réel, une quantité de retour de fluide et les propriétés du fluide injecté, et les données de déformation du tubage comprenant le temps de déformation du tubage, un lieu de déformation du tubage, une quantité de déformation du tubage, un diamètre intérieur du tubage et un diamètre maximal d'un outil de fraisage;

un module de screening (4)
configuré pour construire un adaptateur de relation spatio-temporelle, et écran, en fonction des informations sur les grappes de chaque événement tremblement de terre, les événements tremblement de terre satisfaisant à une condition définie sur la base de l'ajustement de la relation spatio-temporelle pour obtenir un ensemble de données de séries chronologiques sur les tremblements de terre induits;

un premier module de calcul (5)

configuré pour calculer un premier coefficient de corrélation linéaire et un premier coefficient de corrélation non linéaire de chacune des données de facteur de production et de l'ensemble de données de séries chronologiques sur les tremblements de terre induits, et un deuxième coefficient de corrélation linéaire et un deuxième coefficient de corrélation non linéaire de chacune des données de facteur de production et des données de déformation du tubage;

un deuxième module de calcul (6)

configuré pour calculer un premier coefficient de régression de chacun des données de facteur de production et l'ensemble de données de séries chronologiques sur les tremblements de terre induits et un second coefficient de régression de chacune des données de facteur de production et les données de déformation du tubage à l'aide d'un modèle de régression multiple;

un troisième module de calcul (7)

configuré pour calculer un première poids d'importance de chaque les données de facteur de production à l'ensemble de données de séries chronologiques sur les tremblements de terre induits avec une moyenne pondérée en fonction du premier coefficient de corrélation linéaire, du premier coefficient de corrélation non linéaire et du premier coefficient de régression;

un quatrième module de calcul (8)

configuré pour calculer un deuxième poids d'importance de chaque les données de facteur de production aux données de déformation du tubage avec une moyenne pondérée en fonction du deuxième coefficient de corrélation linéaire, du deuxième coefficient de corrélation non linéaire et du deuxième coefficient de régression;

un modèle de détermination de facteur principal de contrôle de la production (9)

configuré pour déterminer une facteur principal de contrôle de la production en fonction du première poids d'importance et du deuxième poids d'importance;

un module de détermination du seuil de risque (10)

configuré pour construire un modèle numérique couplé multi-champs, et déterminer un seuil de risque du facteur principal de contrôle de la production de la région cible sur la base du modèle numérique couplé multi-champs, dans lequel le modèle numérique couplé multi-champs comprend un modèle de structure géologique tridimensionnel comprenant des paramètres de risque de faille et une équation constitutive couplée multi-champs d'un champ d'écoulement de fracturation hydraulique - champ de force de glissement de faille; et

un module d'évaluation (11)

configuré pour évaluer en temps réel un risque potentiel de tremblement de terre sur la base du seuil de risque du facteur principal de contrôle de la production.

9. Un dispositif électronique, comprenant une mémoire et un processeur, dans lequel la mémoire est configurée pour stocker un programme informatique, et le processeur exécute le programme informatique pour amener le dispositif électronique à exécuter la méthode d'évaluation un risque de catastrophe potentielle en temps réel pour optimiser les paramètres d'ingénierie de fracturation hydraulique selon l'une des revendications 1-7.

10. Un support de stockage lisible par ordinateur stockant un programme d'ordinateur, dans lequel le programme d'ordinateur met en œuvre la méthode d'évaluation d'un risque de catastrophe potentielle en temps réel pour optimiser les paramètres d'ingénierie de fracturation hydraulique selon l'une des revendications 1 à 7 lorsqu'il est exécuté par un processeur.

## DRAWINGS

S1 — Obtain, by taking a target shale gas or geothermal development platform as a center, earthquake data in a process of shale gas or geothermal exploitation in a target region in real time by means of near-field monitoring

S2 — Locate each earthquake event according to the earthquake data to obtain cluster information of each earthquake event, and infer a spatial distribution form and a geometric dimension of a fracture and a spatial distribution form and a geometric dimension of a fault according to the cluster information

S3 — Obtain production factor data of a construction unit in the process of shale gas or geothermal exploitation in the target region and casing deformation data occurring in a process of single well fracturing in real time

S4 — Construct a space-time relation fitter, and screen, according to the cluster information of each earthquake event, earthquake events satisfying a set condition on the basis of the space-time relation fitter to obtain an induced earthquake time series dataset

S5 — Calculate a first linear correlation coefficient and a first nonlinear correlation coefficient of each of the production factor data and the induced earthquake time series dataset, and a second linear correlation coefficient and a second nonlinear correlation coefficient of each of the production factor data and the casing deformation data

S6 — Calculate a first regression coefficient of each of the production factor data and the induced earthquake time series dataset and a second regression coefficient of each of the production factor data and the casing deformation data with a multiple regression model

S7 — Calculate a first importance weight of each of the production factor data to the induced earthquake time series dataset with a weighted average according to the first linear correlation coefficient, the first nonlinear correlation coefficient and the first regression coefficient

S8 — Calculate a second importance weight of each of the production factor data to the casing deformation data with a weighted average according to the second linear correlation coefficient, the second nonlinear correlation coefficient and the second regression coefficient

S9 — Determine a main production control factor according to the first importance weight and the second importance weight

S10 — Construct a multi-field coupled numerical model, and determine a risk threshold of the main production control factor of the target region on the basis of the multi-field coupled numerical model

S11 — Assess a potential earthquake risk in real time on the basis of the risk threshold of the main production control factor

FIG. 1

Seismic time series information analysis

Earthquake waveform → Absolute location

Based on travel time
Based on waveform

→ Relative location

Source mechanism inversion

Speed imaging

Cluster analysis

Stress field inversion

Analysis of P wave S wave speed field and Vρ/VS abnormity

Space-time evolution law of earthquake clusters & structural exploration

Analysis of structural stress field

Geological survey and three-dimensional exploration

Surface fault | Stratigraphic section | Stratigraphic section

Underground three-dimensional structure model

Slip tendency | Regional stress field

Risk assessment of fault activation

Correlation analysis of earthquake-fracturing exploitation

Space distribution of platform and horizontal well

Time series information of each production parameter

Fault information including risk attributes

Earthquake information: cluster location, maximum earthquake magnitude, speed imaging, stress field distribution

Principal component analysis

Regression analysis

Non-parametric test

Bayes test

......

Research correlation between earthquake activity and risk as well as multi-parameter quality inspection, and carry out statistical test

Shale gas or geothermal production data processing

Fracturing time | Injection volume | Injection rate | Bottom hole pressure | Fluid flow back | Waste water injection

Data preprocessing, standardization, unified time scale and descriptive statistical analysis

Time series information extraction

Research on main production control factor and threshold of induced earthquake

Establish an index, and sort all parameters related to the induced earthquake

→ Screening the main production control factors, and analyze features of the master control factors

→ Verify importance of the main production control factors on the basis of a physical mechanism

Yes →

Research a quantitative response law of changes in the main production control factors to earthquake induction by means of forward modeling

No

Propose key control parameters supporting a traffic light protocol and threshold settings of the key control parameters

**FIG. 2**

26

(a)

Surface

0 km

2 km

10 km

(b)

2 km

2 km

2 km

2 km

(c)

Surface

0 km

2 km

10 km

(d)

2 km

2 km

2 km

2 km

**FIG. 3**

Overall Pearson r=0.21

Time axis

**FIG. 4**

| | | | | | |
|---|---|---|---|---|---|
| 1 | 2 | 3 | 4 | 5 | 6 |
| First obtaining module | Location module | Second obtaining module | Screening module | First calculation module | Second calculation module |

| | | | | | |
|---|---|---|---|---|---|
| 11 | 10 | 9 | 8 | 7 | |
| Assessment module | Risk threshold determination module | Main production control factor determination module | Fourth calculation module | Third calculation module | |

**FIG. 5**

**REFERENCES CITED IN THE DESCRIPTION**

**Patent documents cited in the description**

- CN 202310202224X

- CN 106971269 A